# EUROPEAN PATENT SPECIFICATION

(11) **EP 2 611 195 B1**
(45) Date of publication and mention of the grant of the patent: **01.06.2016**
(21) Application number: 12199639.1
(22) Date of filing: 28.12.2012
(51) Int. Cl.: H04N 21/418, H04N 21/458, H04N 21/81, H04N 21/45, H04N 21/485

(54) **Display apparatus and associated method for controlling an external upgrade apparatus**
Anzeigevorrichtung und ein zugehöriges Verfahren zur Steuerung einer externen Upgradevorrichtung
Appareil d'affichage et son procédé associé pour controler un dispositif externe de mise à jour

(30) Priority: 28.12.2011 KR 20110144466; 30.12.2011 KR 20110147346; 30.12.2011 KR 20110147336; 31.01.2012 KR 20120009733; 31.01.2012 KR 20120010042; 03.08.2012 KR 20120085037
(43) Date of publication of application: 03.07.2013
(73) Proprietor: Samsung Electronics Co., Ltd, Gyeonggi-do 443-742 (KR)
(72) Inventor: Cho, Shane, Seoul (KR); Ko, Chang-Seog, Gyeonggi-do (KR); Choo, Catherine Estl, Seoul (KR); Kim, Jung-geun, Gyeonggi-do (KR); Choi, Jun-sik, Gyeonggi-do (KR); Kang, Min-gu, Gyeonggi-do (KR); Kang, Yu-so, Seoul (KR); Song, Ji-hyun, Gyeonggi-do (KR); Heo, Weon-seok, Gyeonggi-do (KR)
(74) Representative: Appleyard Lees IP LLP

(56) References cited:
- WO-A2-2004/051390
- US-A1- 2002 124 243
- US-A1- 2009 031 387
- US-A1- 2010 208 136
- US-B1- 6 469 742
- US-B1- 6 668 261

## Description

### BACKGROUND

### Field

Apparatuses and methods consistent with the exemplary embodiments relate to a display apparatus and a control method thereof, and more particularly to a display apparatus which is capable of upgrading a function thereof and a control method thereof.

### Description of the Related Art

A display apparatus, such as a television (TV), is capable of upgrading its functions by performing a software update. However, since a software update has limitations relating to performance of functions which are provided with the software update, there is a need for a capability of efficiently upgrading the functions.

The display apparatus stores information relating to a system configuration and user settings (hereinafter, "setting information") and performs an operation, e.g., displaying an image, based on the stored setting information.

However, there is a case in which the existing setting information is necessary even after a function of the display apparatus is changed, for example, after a function of the display apparatus is upgraded. In particular, if it is impossible to use the existing setting information after upgrading a function, a user may need to inconveniently reset the setting information.

Further, when the display apparatus is upgraded, the setting information may be initialized. A user may need to manually back up and restore the setting information in order to prevent the initialization of the setting information, which is inconvenient.

US 2009/031387 discloses an external module connected to a TV and used for extending the decoding capabilities of said TV.

US 6 469 742 discloses consumer electronic devices with adaptable upgrade expandability.

### SUMMARY

An upgrade apparatus which is connectable to a display apparatus may be used to efficiently upgrade a function of the display apparatus. Accordingly, one or more exemplary embodiments provide a display apparatus which enables use of existing setting information even after a functional upgrade which is performed by using an upgrade apparatus, and a control method thereof.

Further, one or more exemplary embodiments provide a display apparatus which is capable of automatically backing up and restoring setting information while performing an upgrade, and a control method thereof.

In addition, one or more exemplary embodiments provide a display apparatus which enables effective use of software installed in each of the display apparatus and an upgrade apparatus, and a control method thereof.

Features of the present invention are set out in the appended claims.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram which illustrates a configuration of a display system according to an exemplary embodiment.
FIG. 2 is a block diagram which illustrates a configuration of a display apparatus shown in FIG. 1.
FIG. 3 is a block diagram which illustrates a configuration of an upgrade apparatus shown in FIG. 1.
FIGs. 4, 5, and 6 are flowcharts which illustrate respective control methods which are executable by using the display apparatus shown in FIG. 2.
FIGs. 7 and 8 are flowcharts which illustrate respective control methods which are executable by using the upgrade apparatus shown in FIG. 3.
FIG. 9 illustrates a display apparatus according to an exemplary embodiment.
FIG. 10 is a block diagram which illustrates a configuration of a display apparatus according to an exemplary embodiment.
FIG. 11 is a flowchart which illustrates operations of the display apparatus according to an exemplary embodiment.
FIG. 12 illustrates an operation which is executable by the display apparatus for storing setting information according to an exemplary embodiment.
FIG. 13 is a flowchart which illustrates an operation which is executable by the display apparatus for storing the setting information according to an exemplary embodiment.
FIG. 14 is a flowchart which illustrates an operation which is executable by the display apparatus for restoring the setting information according to an exemplary embodiment.
FIG. 15 illustrates a display system according to an exemplary embodiment.
FIG. 16 is a block diagram which illustrates a configuration of the display system according to an exemplary embodiment.
FIGS. 17 and 18 illustrate a method for upgrading an image processing process which is executable by using a display apparatus by using an upgrade apparatus according to an exemplary embodiment.
FIG. 19 illustrates a configuration in which two upgrade apparatuses are selectively connected to the display apparatus according to an exemplary embodiment.
FIG. 20 is a flowchart which illustrates a method for storing configuration information in real time based on a change in the configuration information when a first upgrade apparatus and the display apparatus are connected according to an exemplary embodiment.
FIG. 21 is a flowchart which illustrates a method for storing configuration information according to a particular event when the first upgrade apparatus and the display apparatus are connected according to an exemplary embodiment.
FIG. 22 is a flowchart which illustrates a method for performing an upgrade when a second upgrade apparatus is connected to the display apparatus, with the configuration information stored in the display apparatus according to an exemplary embodiment.
FIG. 23 illustrates a display system according to an exemplary embodiment.
FIG. 24 is a block diagram which illustrates a configuration of the display system according to an exemplary embodiment.
FIG. 25 illustrates a configuration in which two upgrade apparatuses are selectively connected to a display apparatus in the display system according to an exemplary embodiment.
FIG. 26 is a flowchart which illustrates a method for storing setting information in real time based on a change in the setting information when a first upgrade apparatus and the display apparatus are connected according to an exemplary embodiment.
FIG. 27 is a flowchart which illustrates a method for storing the setting information according to a particular event when the first upgrade apparatus and the display apparatus are connected according to an exemplary embodiment.
FIG. 28 is a flowchart which illustrates a method for performing an upgrade when a second upgrade apparatus is connected to the display apparatus, with the setting information stored in an external device in the display system according to an exemplary embodiment.
FIG. 29 schematically illustrates a display apparatus according to an exemplary embodiment.
FIG. 30 is a block diagram which illustrates a configuration of the display apparatus according to an exemplary embodiment.
FIG. 31 is a flowchart which illustrates a control method which is executable by using the display apparatus according to an exemplary embodiment.
FIG. 32 illustrates a process by which the display apparatus upgrades a software component in detail according to an exemplary embodiment.
FIG. 33 illustrates a data exchange between the display apparatus and an upgrade apparatus according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

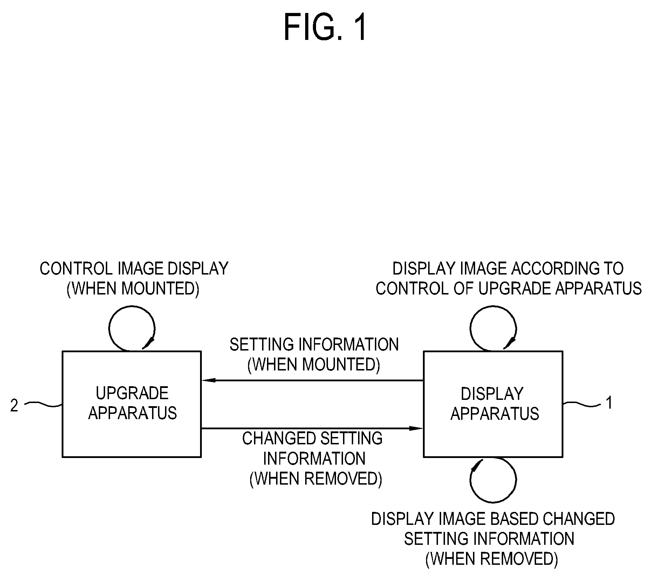

FIG. 1 is a block diagram which illustrates a configuration of a display system according to an exemplary embodiment. The display system according to the present exemplary embodiment includes a display apparatus 1 and an upgrade apparatus 2. The display apparatus may be configured as, for example, a television (TV). The display apparatus 1 and the upgrade apparatus 2 are connected in order to communicate with each other. The upgrade apparatus 2 transmits an image signal carrying an image, and the display apparatus 1 displays an image based on the image signal received from the upgrade apparatus 2. The upgrade apparatus 2 may be detachable from the display apparatus 1.

The upgrade apparatus 2 contributes to upgrading at least one function of the display apparatus 1. The at least one function of the display apparatus 1 includes any function that the display apparatus 1 can perform, for example, a TV function, an image displaying function of an external imaging device, a multimedia content reproducing function, and a network function. The display apparatus 1 performs an upgraded function by using the mounted upgrade apparatus 2. The upgrade apparatus 2 includes hardware and/or software necessary to functionally upgrade the display apparatus 1. For example, the upgrade apparatus 2 may include an image processor which has been more recently upgraded than an image processor of the display apparatus 1, which will be described. Further, the upgrade apparatus 2 may include a controller which has been more recently upgraded than a controller of the display apparatus 1, which will be described. The display apparatus 1 may replace a function thereof with an upgraded function of the upgrade apparatus 2 or perform a function thereof and a function of the upgrade apparatus 2 in combination by using the upgrade apparatus 2.

The display apparatus 1 uses setting information in performing a function. The setting information on the display apparatus 1 includes any information to be used for reference in performing various functions, e.g., a user's favorite channel, color of an image, brightness, volume, a font, time, local settings, and channel settings. The setting information on the display apparatus 1 is stored in a storage, which will be described, and used in performing a function.

The display apparatus 1 synchronizes the setting information with the upgrade apparatus 2 in correspondence with a function upgrade which is performed by using the upgrade apparatus 2. Then, the display apparatus 1 performs an upgraded function with reference to the synchronized setting information by using the upgrade apparatus 2.

Accordingly, even after a function of the display apparatus 1 is upgraded by using the upgrade apparatus 2, the existing setting information may be suitably used, thereby improving convenience of a user.

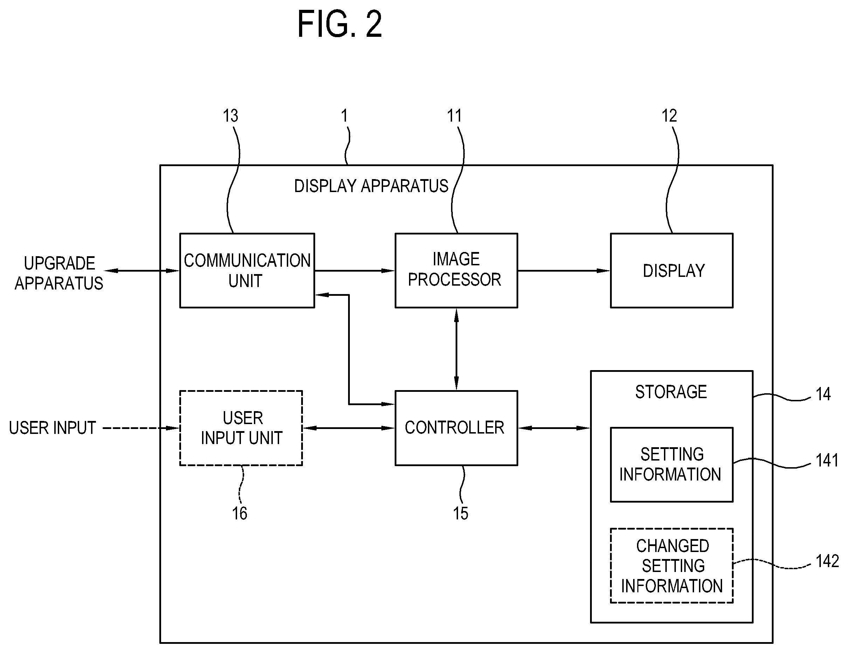

FIG. 2 is a block diagram which illustrates a configuration of the display apparatus 1 shown in FIG. 1. The display apparatus 1 includes an image processor 11, a display 12, a communication unit 13, a storage 14, and a controller 15. The display apparatus 1 may further include a receiver (not shown) for receiving an image signal. The receiver may receive a broadcast signal from a broadcast signal transmission unit (not shown), e.g., a TV broadcast signal, as an image signal, receive an image signal from an imaging device, such as a digital versatile disk (DVD) player and a Blu-ray disk (BD) player, receive an image signal from a personal computer (PC), receive an image signal from mobile equipment, such as a smartphone and/or a smart pad, receive an image signal via a network, such as the Internet, or receive image content stored in a storage medium, such as a USB storage medium, as an image signal.

The image processor 11 processes an image signal received by the upgrade apparatus 2 and/or the receiver in order to display an image. The display 12 displays an image based on the image signal processed by the image processor 11.

The communication unit 13 performs communication with the mounted upgrade apparatus 2. The communication unit 13 and the upgrade apparatus 2 may communicate with each other in any communication mode, without being particularly limited, for example, HDMI and USB. The communication unit 13 receives/sends data necessary for the display apparatus 1 to perform an upgraded function from/to the upgrade apparatus 2, while performing communication with the upgrade apparatus 2 based on a control performed by the controller 15. The communication unit 13 may include a device which is configured for performing communication, such as a transmitter, a receiver, and/or a transceiver.

The storage 14 includes a nonvolatile memory, e.g., a flash memory and/or a hard disk, and stores setting information 141.

The controller 15 globally controls all of the foregoing components. The controller 15 transmits the setting information 141 which is stored in the storage unit 14 and which corresponds to a function upgrade which is performed by using the upgrade apparatus 2 to the upgrade apparatus 2, and performs control so that an upgrade function is carried out by control of the upgrade apparatus 2. Although not shown in FIG. 2, the controller 15 may include a nonvolatile memory for storing a control program which enables a control operation, a volatile memory for loading at least part of the stored control program, and a microprocessor for executing the loaded program.

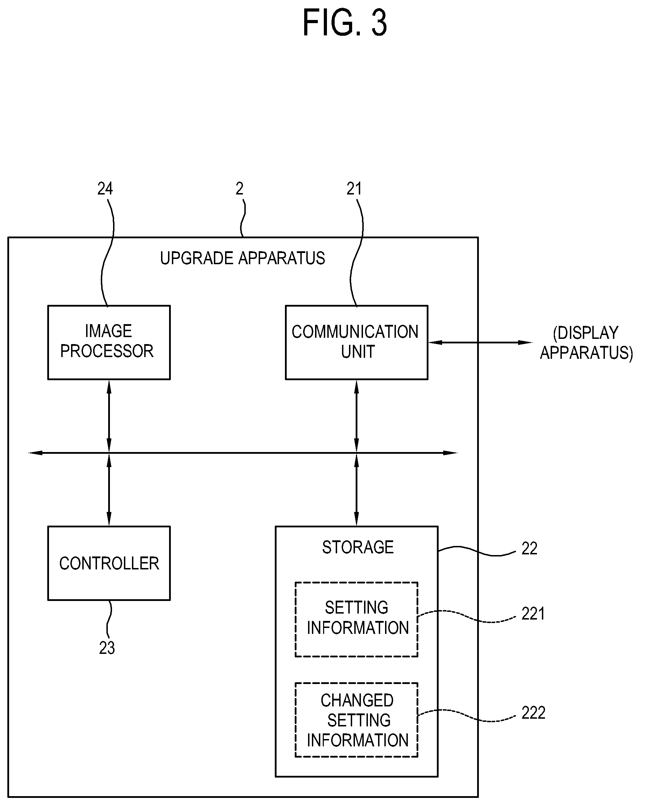

FIG. 3 is a block diagram which illustrates a configuration of the upgrade apparatus 2 shown in FIG. 1. The upgrade apparatus 2 includes a communication unit 21, a storage 22, and a controller 23. The communication unit 21 communicates with the communication unit 13 of the display apparatus 1. The storage 22 stores setting information 221 which is received from the display apparatus 1. The controller 23 receives the setting information 221 from the display apparatus 1, stores the information in the storage 22, and controls the display apparatus 1 in order to display an image based on the stored setting information 221.

The upgrade apparatus 2 may further include an image processor 24 which is usable for an image. For example, the controller 23 may control the image processor 24 to process a graphic image, such as a graphical user interface (GUI), which graphic image may overlap a video image displayed on the display apparatus 1. The image processor 24 may refer to the setting information 221 stored in the storage 22. For example, in the case of a graphic image such as a monitor setup menu, the setting information 221 may include a set value displayed on the monitor setup menu, such as a color level and a brightness level set in the display apparatus 1 by the user. The image processor 24 may reflect a set value previously set up by the user to the monitor setup menu with reference to the setting information 221 when processing the monitor setup menu provided to the display apparatus 1.

When the setting information 221 is changed, the controller 23 may store the changed setting information 222 in the storage 22. Similarly as the controller 15, the controller 23 may include a nonvolatile memory for storing a control program, a volatile memory, and a microprocessor.

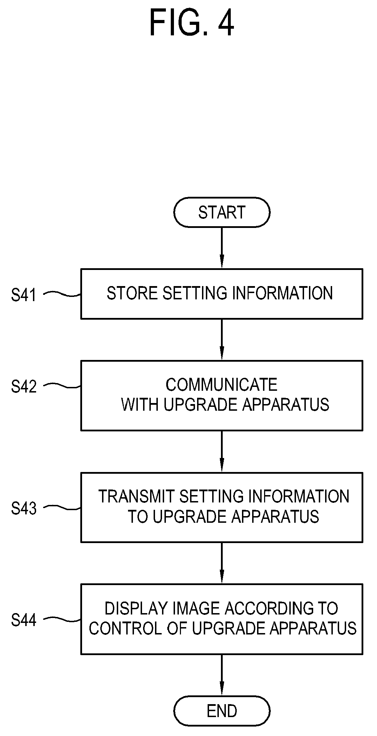

FIG. 4 is a flowchart which illustrates a control method which is executable by using the display apparatus 1 shown in FIG. 2. In operation S41, the display apparatus 1 stores setting information 141 which relates to a predetermined function in the storage 14. For example, when a user adjusts a brightness level of a screen, the display apparatus 1 stores the setting information 141 relating to a corresponding level in the storage 14. The display apparatus 1 may further include a user input unit 16 which is usable for receiving input provided by the user with respect to the setting information 141. The user input unit 16 may include a user input device, a hardware component which is configured for receiving user input, and/or a device which includes a software program which enables the display apparatus 1 to receive user input.

In operation S42, the display apparatus 1 conducts communication with the upgrade apparatus 2. The display apparatus 1 may communicate with the upgrade apparatus 2 when the upgrade apparatus 2 is mounted and connected to the display apparatus 1. The display apparatus 1 identifies which function is supported by the upgrade apparatus 2 in conjunction with an upgrading of the display apparatus 1 via communication with the upgrade apparatus 2. Such a function may include, for example, an image processing function which is executable by using the image processor 24 and a control function which is executable by using the controller 23. In addition, the upgrade apparatus 2 may further include a signal input unit (not shown) for receiving an image signal from the outside to be provided to the display apparatus 1 and a signal output unit (not shown) for outputting an image signal received from the display apparatus 1 to the outside. In each case, a relevant function of the display apparatus 1 is upgraded.

In operation S43, the display apparatus 1 transmits the stored setting information 141 to the upgrade apparatus 2. The display apparatus 1 may transmit the setting information 141 which corresponds to a function that is supported by the upgrade apparatus 200 in conjunction with an upgrading of the display apparatus 1 to the upgrade apparatus 2. To this end, the setting information 141 stored in the storage 14 may be sorted and stored by functions which are executable by using the display apparatus 1.

In operation S44, the display apparatus 1 performs an upgraded function, that is, displays an image, based on a control of the upgrade apparatus 2. For example, the display apparatus 1 may receive a graphic image, for example, a GUI, from the upgrade apparatus 2 and display the graphic image, which graphic image may overlay a video image which has been internally processed. In particular, the setting information 141 and 221 received from the display apparatus 1 are used for processing the graphic image. For example, in the case of a monitor setup menu, a set value, such as a color level and a brightness level, which set value has been previously set up by a user and displayed on the monitor setup menu set, is reflected on a monitor setup menu which is received by the display apparatus 1 via processing by the upgrade apparatus 2. Thus, a use environment remains unchanged even after an upgrade, thereby improving convenience of a user.

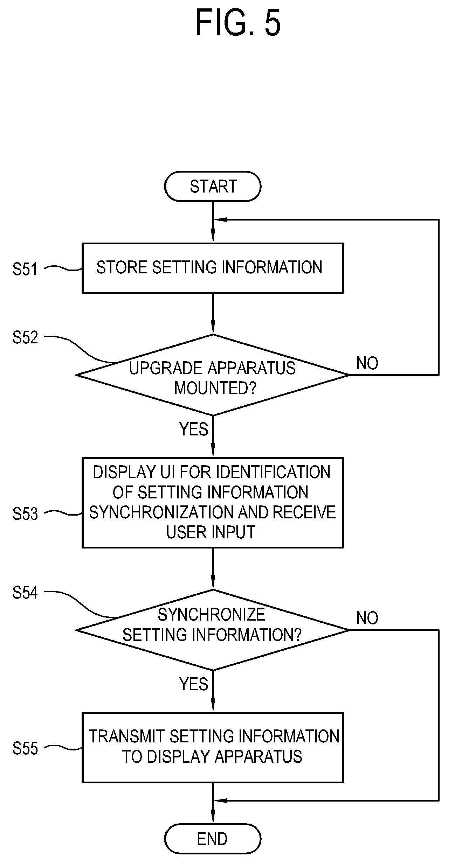

FIG. 5 is a flowchart which illustrates another control method which is executable by using the display apparatus 1 shown in FIG. 2. In operation S51, the display apparatus 1 stores the setting information 141. In operation S52, the display apparatus 1 determines whether the upgrade apparatus 2 is mounted on the display apparatus 1. When the upgrade apparatus 2 is mounted on the display apparatus 1, the display apparatus 1 displays a user interface (UI) for checking synchronization of the setting information and receiving user input in operation S53. For example, the UI for checking the synchronization of the setting information may include a message which indicates that the upgrade apparatus 2 is mounted on the display apparatus 1, a message which inquires of a user regarding whether to conduct synchronization of the setting information, and a button item which indicates that the synchronization of the setting information has been executed.

In operation S54, the display apparatus 1 determines whether the synchronization of the setting information has been executed based on user input. When the synchronization of the setting information has been executed, the display apparatus 1 transmits the setting information 141 to the upgrade apparatus 2 in operation S55.

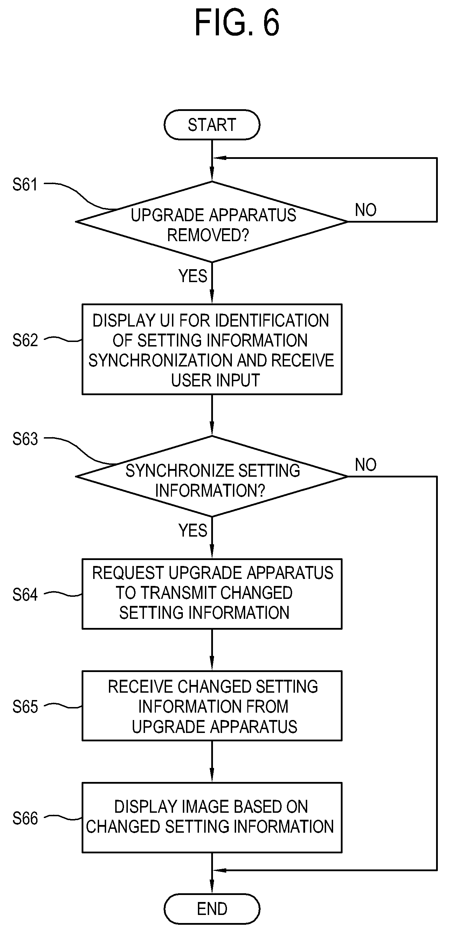

FIG. 6 is a flowchart which illustrates another control method which is executable by using the display apparatus 1 shown in FIG. 2. In operation S61, the display apparatus 1 determines whether the upgrade apparatus 2, which is mounted and connected to the display apparatus 1, has been removed from the display apparatus 1. When the upgrade apparatus 2 has been removed from the display apparatus 1, the display apparatus 1 displays a UI for checking synchronization of the setting information and for receiving user input in operation S62. For example, the UI for checking the synchronization of the setting information may include a message which indicates that the upgrade apparatus 2 has been removed from the display apparatus 1, a message which inquires of a user regarding whether to conduct synchronization of the setting information, and a button item which indicates that the synchronization of the setting information has been executed.

In operation S63, the display apparatus 1 determines whether the synchronization of the setting information has been executed based on user input. When the synchronization of the setting information has been executed, the display apparatus 1 transmits a request to the upgrade apparatus 2 for transmitting changed setting information 222 in operation S64. Then, in operation S65, the display apparatus 1 receives the changed setting information 222 which has been transmitted by the upgrade apparatus 2. In operation S66, the display apparatus 1 displays an image based on the changed setting information 222. The display apparatus 1 may store the changed setting information 222 (142) in the storage unit. Accordingly, the previous setting information may remain unchanged for use even after the upgrade apparatus 2 is removed, thereby improving convenience of the user.

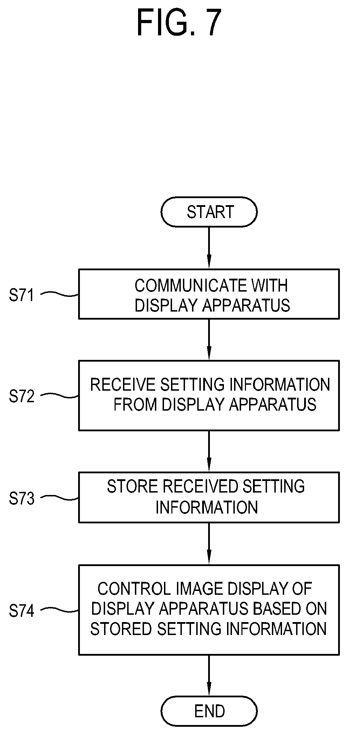

FIG. 7 is a flowchart which illustrates a control method which is executable by using the upgrade apparatus 2 shown in FIG. 3. In operation S71, when the upgrade apparatus 2 is connected to the display apparatus 1, the upgrade apparatus 2 performs communication with the display apparatus 1. In operation S72, the upgrade apparatus 2 receives setting information 141 from the display apparatus 1. In operation S73, the upgrade apparatus 2 stores the received setting information 221. In operation S74, the upgrade apparatus 2 controls the display apparatus 1 to display an image based on the setting information 221.

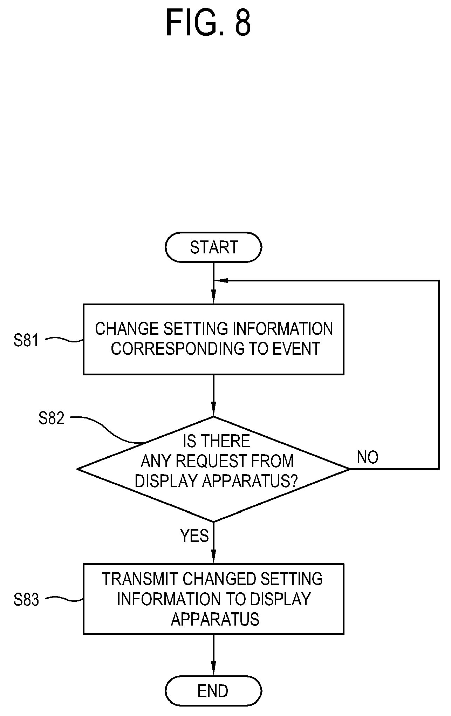

FIG. 8 is a flowchart which illustrates another control method which is executable by using the upgrade apparatus 2 shown in FIG. 3. In operation S81, the upgrade apparatus 2 changes setting information 221 into changed setting information 222, which is then stored in the storage 22, in correspondence with a particular event. The event which corresponds to the change of the setting information 221 may include, for example, an occasion when the setting information 221 is changed by user input or an occasion when the setting information 221 is changed by a system change of the upgrade apparatus 2. In operation S82, the upgrade apparatus 2 determines whether there is a request for the changed setting information 222 from the display apparatus 1. When there is a request for the changed setting information 222 from the display apparatus 1, the upgrade apparatus 2 transmits the changed setting information 222 to the display apparatus 1 in operation S83.

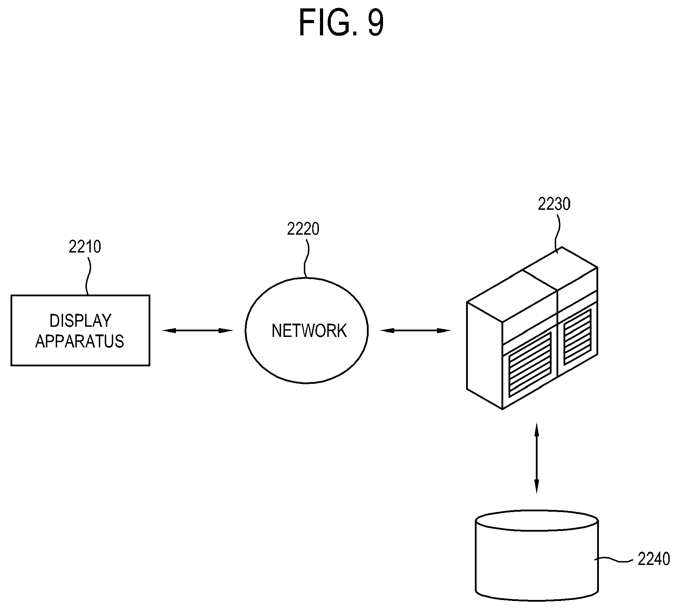

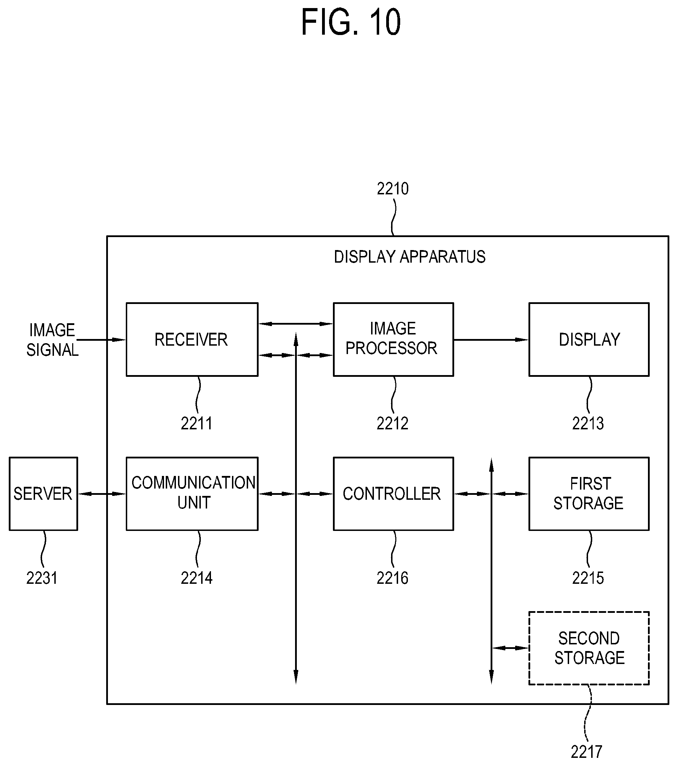

FIG. 9 illustrates a display apparatus according to an exemplary embodiment, and FIG. 10 is a block diagram which illustrates a configuration of the display apparatus. Descriptions of equivalent or similar components of the display apparatus according to the present exemplary embodiment to those of the display apparatus 1 described with reference to FIGS. 1 to 8 will be omitted herein.

As shown in FIG. 9, the display apparatus 2210 according to the present exemplary embodiment communicates with a server system 2230 via a network 2220. Referring also to FIG. 10, the server system 2230 may include a server 2231 and a backup storage 2240. In another exemplary embodiment, the server 2231 and the backup storage 2240 may be provided as independent devices, and the display apparatus 2210 may communicate with the server. Communication between the display apparatus 2210 and the server system 2230 or the server 2231 may be conducted not only via the network 2220 but also via at least one of USB or HDMI ports.

Referring to FIG. 10, the display apparatus 2210 may include a first storage 2215 which stores setting information. The display apparatus 2210 stores and uses setting information which is stored in the first storage 2215 for performing a function relating to the stored setting information. Referring to FIG. 10, the display apparatus 2210 includes a receiver 2211 which receives an image signal, an image processor 2212 which processes an image signal received by the receiver 221 in order to display an image, a display 2213 which displays an image based on an image signal processed by the image processor 2212, a communication unit 2214 which communicates with the server 2231, the first storage 2215 which stores setting information, and a controller 2216.

The display apparatus 2210 stores the setting information relating to the display apparatus 2210 in the first storage 2215 and controls the stored setting information to be backed up, or stored, before performing an upgrade by using the upgrade apparatus 2230. The display apparatus 2210 may store the setting information at predetermined intervals, whenever the setting information is changed, when hardware/software is changed, when a user wants backup, or just before performing an upgrade by using the upgrade apparatus 2230.

The display apparatus 2210 may further include a second storage 2217 which stores the setting information. Alternatively, the display apparatus 2210 may store the setting information in the backup storage 2240. In this case, the display apparatus 2210 may provide a request for a backup of the setting information on the display apparatus 2210 to the server 2231. The server 2231 receives the setting information from the display apparatus 2210 and stores the setting information in the backup storage 2240.

When the upgrade apparatus 2230 is mounted on the display apparatus 2210 in order to perform an upgrade, the display apparatus 2210 may perform an upgrade based on the stored setting information.

In storing the setting information, the display apparatus 2210 may selectively store the setting information in conjunction with respective information relating to each of a plurality of items which correspond to respective functions of the display apparatus 2210. For example, the display apparatus 2210 may determine whether setting information which corresponds to each respective item from among the plurality of items has changed, and select and store changed setting information relating to each item. In this manner, changed setting information relating to each item is selectively stored, thereby enhancing data backup efficiency.

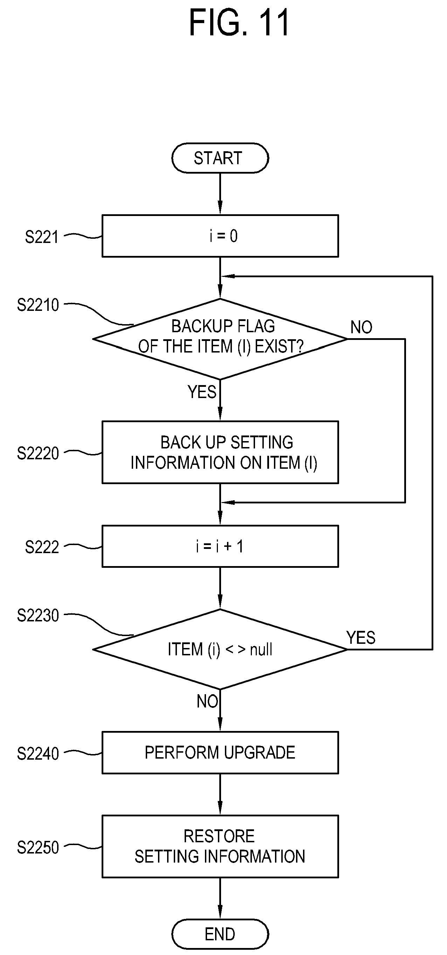

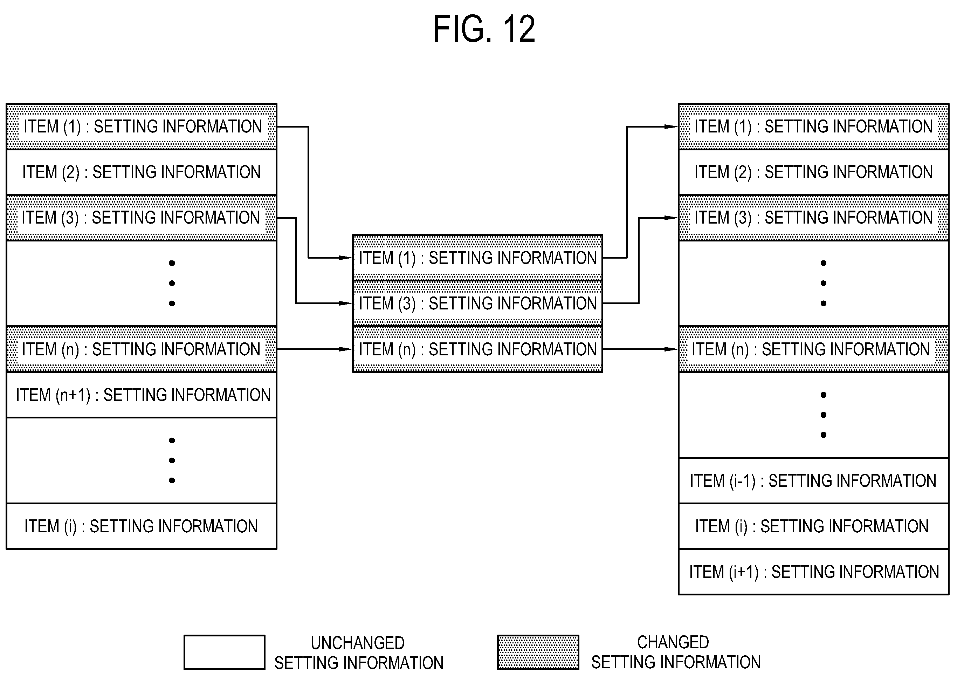

The display apparatus 2210 may store setting information relating to an item which has a changed setting information value from among the setting information stored in the first storage 2215. For example, the display apparatus 2210 may selectively store setting information which has changed with respect to an initial value, and may not store unchanged setting information. FIG. 11 is a flowchart which illustrates operations which are executable by using the display apparatus 2210 according to an exemplary embodiment. In the present exemplary embodiment, each item is represented by an "ITEM(i)." In operation S221, a variable i (i is an integer which is 0 or greater) is set equal to 0. In operation S2210, the display apparatus 2210 determines whether there is a backup flag of the ITEM (i). The backup flag of the ITEM (i) may be generated when corresponding setting information is changed. When there is the backup flag of the ITEM (i), the display apparatus 2210 stores the setting information which corresponds to the ITEM (i) in operation S2220. In operation S222, the variable i is incremented by one so that a new value of i is equal to i+1 as computed by using the previous value of i. In operation S2230, the display apparatus 2210 determines whether a backup has been executed with respect to all items. When a backup has been completed with respect to all items, the display apparatus 2210 performs an upgrade by using the mounted upgrade apparatus 2230 in operation S2240. In the upgrade, the display apparatus 2210 restores the previously stored setting information and performs the upgrade apparatus based on the restored setting information in operation S2250. FIG. 12 illustrates an operation which is executed by the display apparatus for storing setting information according to an exemplary embodiment. As shown in FIG. 12, only setting information which has been changed is backed up.

In an upgrade which is performed by using the upgrade apparatus 2230, the display apparatus 2210 may store the setting information based on a data structure of the setting information. In particular, the display apparatus 2210 may compare a data structure of an item of setting information to be stored with a data structure of a corresponding item of setting information to be upgraded, and store the setting information relating to the item when the data structures correspond to each other. In the present exemplary embodiment, a data structure may be determined by using an identification number allocated to each item. For example, an identification number may be allocated to each item, such as channel management (channel registration/deletion, favorite channel setting, watching reservation, recording reservation, and time shift mode setting), a digital broadcast function (channel guide view), and security setting (channel lock setting, password change).

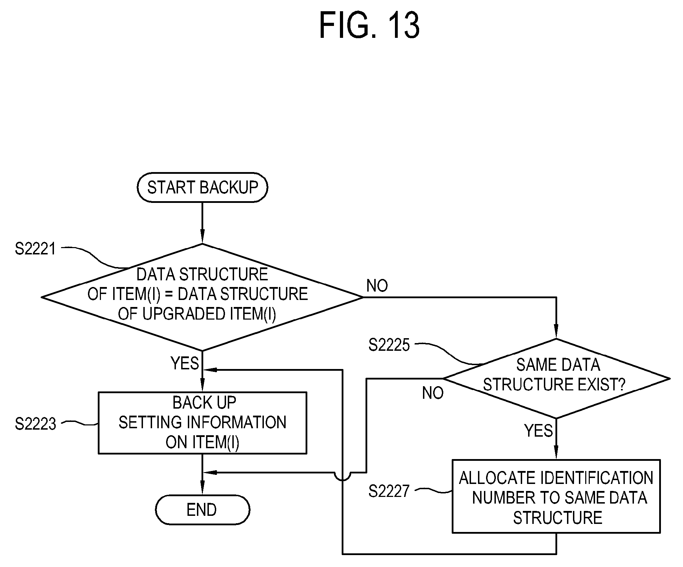

FIG. 13 is a flowchart which illustrates an operation which is executable by the display apparatus 2210 for storing setting information according to an exemplary embodiment. In the present exemplary embodiment, the upgrade apparatus 2230 will be mounted on the display apparatus 2210 in order to perform an upgrade. First, the display apparatus 2210 compares a data structure of an item of setting information to be stored with a data structure of a corresponding item to be upgraded in operation S2221. When the two data structures correspond to each other, the display apparatus 2210 stores the setting information relating to the item in operation S2223. When the data structures do not correspond to each other, the display apparatus 2210 determines whether the data structures partly correspond to each other in operation S2225. When the data structures partly correspond to each other, the display apparatus 2210 allocates an identification numbers to the parts which correspond in operation S2227 and stores corresponding setting information in operation S2223.

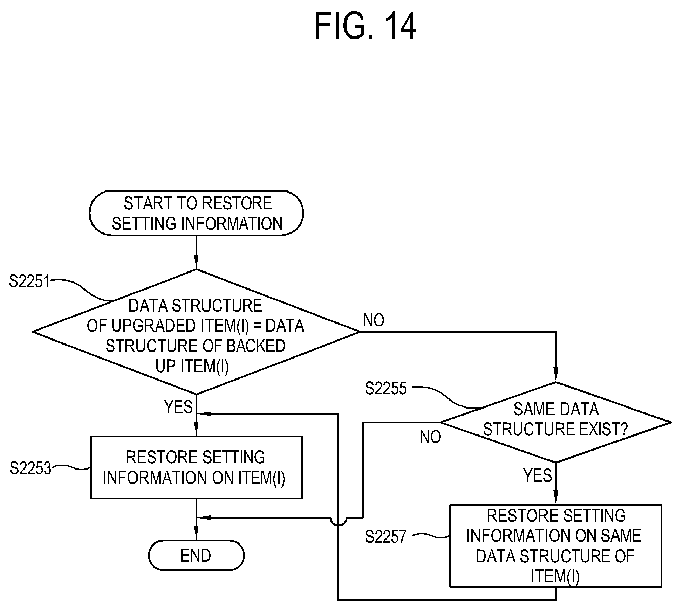

FIG. 14 is a flowchart which illustrates an operation which is executable by using the display apparatus 2210 for restoring setting information according to an exemplary embodiment. First, the display apparatus 2210 compares a data structure of an item to be upgraded with a data structure of a stored item in operation S2251. When the data structures correspond to each other, the display apparatus 2210 restores corresponding setting information in operation S2253. However, when the data structures do not correspond to each other, the display apparatus 2210 determines whether the data structures partly correspond to each other in operation S2255. When the data structures partly correspond to each other, the display apparatus 2210 restores setting information on a part which corresponds and which has been allocated an identification number in the data structure in operation S2257.

As described above, the display apparatus 2210 according to the present exemplary embodiment automatically backs up and restores existing setting information, and thus the preset information may be used after an upgrade. Further, even though a data structure of setting information has been changed, the display apparatus 2210 may restore setting information relating to a part of the data for which the data structure corresponds to the data structure relating to the upgrade.

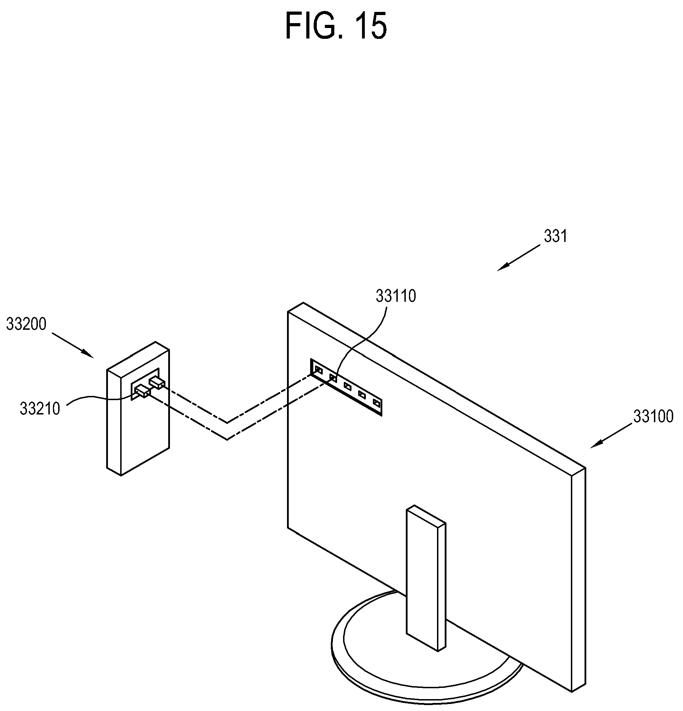

FIG. 15 illustrates a display system 331 according to an exemplary embodiment. As shown in FIG. 15, the display system 331 according to the present exemplary embodiment includes a display apparatus 33100 which processes an image signal provided from an external image source (not shown) based on a preset image processing process and displays an image based on the image signal, and an upgrade apparatus 33200 which is configured for upgrading hardware/software of the display apparatus 33100. In the present exemplary embodiment, descriptions of equivalent or similar components of the display apparatus 33100 to those of the display apparatuses 1 and 2210 described with reference to FIGS. 1 to 14 will be omitted herein.

In the system 331 of the present exemplary embodiment, the display apparatus 33100 is configured as a TV which displays broadcast images based on broadcast signals/broadcast information/broadcast data received from a transmitter of a broadcasting station. However, the display apparatus 33100 may be configured as various types of devices which are capable of displaying images, without being limited to a TV.

The display apparatus 33100 may display any image, without being limited to broadcast images. For example, the display apparatus 33100 may display images, such as videos, still images, applications, on-screen displays (OSD) based on signals/data received from various types of image sources (not shown), and graphic user interfaces (GUI) for controlling various operations.

The upgrade apparatus 33200 is connected to the display apparatus 33100 for communication therewith. The upgrade apparatus 33200 upgrades existing hardware/software of the connected display apparatus 33100 and enables an image signal to be processed by the upgraded hardware/software of the display apparatus 33100, thereby displaying an image which has improved quality.

The upgrade apparatus 33200 may be connected to the display apparatus 33100 via a cable or wirelessly. In the present exemplary embodiment, the upgrade apparatus 33200 is connected to the display apparatus 33100 via a cable, thereby enabling transmission and reception of data/information/signals/power between the upgrade apparatus 33200 and the display apparatus 33100. The display apparatus 33100 and the upgrade apparatus 33200 respectively include connectors/terminals 33110 and 33210 for physical/electrical connection to each other.

Alternatively, the upgrade apparatus 33200 may be connected to the display apparatus 33100 wirelessly. In this case, the upgrade apparatus 33200 is supplied with operating power from a separate external power source or battery. However, the present exemplary embodiment is described with reference to a case in which the upgrade apparatus 33200 is connected to the display apparatus 33100 via a cable.

The display apparatus 33100 may solely process an image signal received from the outside based on a preset image processing process and display an image based on the image signal. In the present exemplary embodiment, however, as the display apparatus 33100 and the upgrade apparatus 33200 are connected, hardware/software of the display system 331 which performs the image processing process has been upgraded, thereby providing a user with an image which has relatively improved quality.

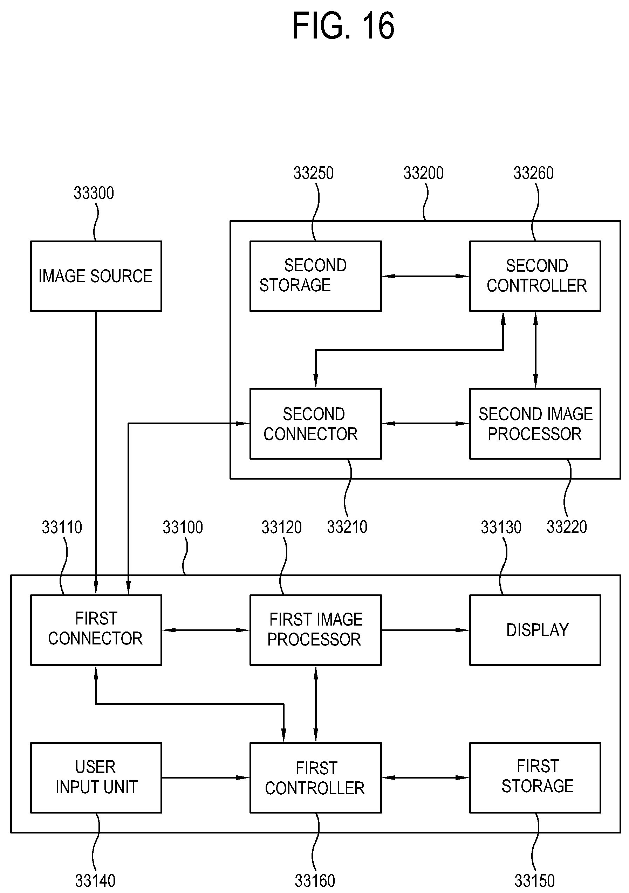

Hereinafter, configurations of the display apparatus 33100 and the upgrade apparatus 33200 will be described with reference to FIG. 16. FIG. 16 is a block diagram illustrating the configurations of the display apparatus 33100 and the upgrade apparatus 33200 constituting the display system 331.

As shown in FIG. 16, the display apparatus 33100 includes a first connector 33110 to which at least one image source 33300 is connected, a first image processor 33120 which processes an image signal received from the image source 33300 via the first connector 33110, a display 33130 which displays an image based on an image signal processed by the first image processor 33120, a user input unit 33140 which outputs a preset command based on manipulation by a user, a first storage 33150 which stores unlimited data/information, and a first controller 33160 which generally controls operations of components of the display apparatus 33100.

The first connector 33110 transmits an image signal received from the at least one image source 33300 to the first image processor 33120 and is configured as any one of various types corresponding to standards of received image signals or kinds of the image source 33300 and the display apparatus 33100. For example, the first connector 33110 may receive signals/data in accordance with the high definition multimedia interface (HDMI), USB, and component standards and include a plurality of connection terminals (not shown) corresponding to the respective standards. Various external devices including the image source 33300 may be connected to the connection terminals, thus enabling communication via the first connector 33110.

In particular, any external device capable of transmitting and receiving signals/data to and from the display apparatus 33100 via the first connector 33110 may be connected to the first connector 33110, without being limited to the image source 33300. In the present exemplary embodiment, the upgrade apparatus 33200 may be connected to the first connector 33110.

The first image processor 33120 performs various preset image processing processes on an image signal received via the first connector 33110. The first image processor 33120 outputs a processed image signal to the display 33130, so that an image based on the image signal is displayed on the display 33130.

The first image processor 33120 may perform any type of image processing, without being limited to, for example, demultiplexing to separate a signal into characteristic signals, decoding corresponding to an image format of an image signal, de-interlacing to convert an interlaced image signal into a progressive form, scaling to adjust an image signal to a preset resolution, noise reduction to improve image quality, detail enhancement, frame refresh rate conversion, or the like.

The first image processor 33120 may be provided as an image processing board (not shown) in which each of a circuit system which may include one or more of various chip sets (not shown) which are configured to conduct such processes, a memory (not shown), electronic components (not shown) and wiring (not shown), is mounted on a printed circuit board (PCB, not shown).

The display 33130 displays an image based on an image signal output from the first image processor 33120. The display 33130 may be configured as at least one of various display types using liquid crystals, plasma, light emitting diodes, organic light emitting diodes, a surface conduction electron emitter, a carbon nano-tube, nano-crystals, or the like, without being limited thereto.

The display 33130 may further include an additional element depending on a display mode thereof. For example, in a display mode using liquid crystals, the display 33130 may include a liquid crystal display (LCD) panel, a backlight unit (not shown) providing light to the panel, and a panel drive board (not shown) driving the panel.

The user input unit 33140 transmits various preset control commands or unlimited information to the first controller 33160 in response to manipulation and/or input provided by a user. The user input unit 33140 may be provided as a menu key and an input panel installed on an outside of the display apparatus 33100 or as a remote controller which is physically separate from the display apparatus 33100.

Alternatively, the user input unit 33140 may be integrally configured as a single body with the display 33130. In particular, if the display 33130 includes a touch screen, a user may transmit a preset command to the first controller 33160 via an input menu (not shown) displayed on the display 33130.

The first storage 33150 stores unlimited data based on control performed by the first controller 33160. The first storage 33150 may be configured as a nonvolatile memory, such as a flash memory and/or a hard disk drive. The first storage 33150 is accessed by the first controller 33160, and the data stored in the first storage 33150 may be read/recorded/revised/deleted/updated by the first controller 33160.

The first storage 33150 may store, for example, an operating system for operating the display apparatus 33100, and various applications, image data and optional data which are executable by using the operating system.

The first controller 33160 performs control operations of various components of the display apparatus 33100. For example, the first controller 33160 may conduct one or more of an image processing process of the first image processor 33120, transmission and reception of signals/information/data via the first connector 33110, and a control operation in response to a command from the user input unit 33140, thereby controlling general operations of the display apparatus 33100.

The display apparatus 33100 having the foregoing configuration may require upgrading over time due to various factors including technology development. Upgrading is necessary for various cases, for example, in order to receive an image signal in a new format which had not been contemplated when the display apparatus 33100 was first manufactured, or in order to receive an image signal which has a higher quality level or resolution level than that supported solely by the display apparatus 33100, in view of a trend towards a demand for high-quality images, or in order to reduce system load of the display apparatus 33100.

Upgrading the display apparatus 33100 may be executed with respect to either or both of hardware and software. In the present exemplary embodiment, the upgrade apparatus 33200 which has been provided to upgrade the display apparatus 33100 is connected to the first connector 33110, thereby upgrading at least one of the existing hardware and software configurations of the display apparatus 33100.

The upgrade apparatus 33200 includes hardware/software configurations which correspond to at least a part of hardware/software resources of the display apparatus 33100. These hardware/software configurations of the upgrade apparatus 33200 are provided to perform more improved functions than the at least the corresponding part of the resources of the display apparatus 33100. When the upgrade apparatus 33200 is connected to the display apparatus 33100, the hardware/software configurations of the upgrade apparatus 33200 replace at least part of the existing resources of the display apparatus 33100, thereby ultimately improving quality of an image displayed on the display apparatus 33100.

Hereinafter, the configuration of the upgrade apparatus 33200 will be described. The upgrade apparatus 33200 includes a second connector 33210 which is connected to the first connector 33110 of the display apparatus 33100, a second image processor 33220 which is capable of performing processes corresponding to at least part of the image processing processes of the first image processor 33120, a second storage 33250 which stores unlimited data/information, and a second controller 33260 which controls general operations of the upgrade apparatus 33200.

The second connector 33210 is connected to the first connector 33110, thereby enabling communication between the upgrade apparatus 33200 and the display apparatus 33100. The second connector 33210 may be provided in accordance with a standard which corresponds to the first connector 33110 so as to connect to the first connector 33110 and to be connected to at least one of the connection terminals (not shown) of the first connector 33110.

For example, the second connector 33210 may be connected to an HDMI terminal (not shown) for transmission and reception of image signals between the display apparatus 33100 and the upgrade apparatus 33200 or be connected to a USB terminal (not shown) for transmission and reception of data and power. However, the first connector 33110 and the second connector 33210 may be connected in various modes, without being limited to the above examples.

The second image processor 33220 may perform a second process corresponding to a first process, which is part of the processes performed by the first image processor 33120 of the display apparatus 33100. The terms "first process" and "second process" are named only for convenience to distinguish processes from each other and such processes may be a single unit process or a plurality of unit processes. The second process is functionally improved as compared with the first process, and is achieved by upgrading hardware, such as a chip set, or software, such as algorithms/executable codes/programs.

The second image processor 33220 performs the second process, instead of the first process, based on a control executed by the first controller 33160 or the second controller 33260 when the display apparatus 33100 and the upgrade apparatus 33200 are connected. In this manner, the second process, which is more functionally improved than the first process, is implemented instead of the first process, thereby enhancing the image processing process overall, which will be described.

The second storage 33250 stores unlimited data. The second storage 33250 is configured as a nonvolatile memory, such as a flash memory and/or a hard disk drive. The second storage 33250 is accessed by the first controller 33160 or the second controller 33260, and the data stored in the second storage 33250 is read/recorded/revised/deleted/updated by either or both of these controllers 33160 and 33260. In addition, the first storage 33150 may also be accessed by not only the first controller 33160, but also by the second controller 33260, depending on a configuration thereof.

The second controller 33260 controls a connection between the display apparatus 33100 and the upgrade apparatus 33200 for performing a general image processing process. The second controller 33260 and the first controller 33160 may be configured as a central processing unit (CPU). Thus, if the second controller 33260 performs a more improved function than the first controller 33160, the second controller 33260 may disable the first controller 33160 and control general operations of the display system 331 instead of the first controller 33160. Alternatively, the second controller 33260 may control the general operations of the display system 331 together with the first controller 33160.

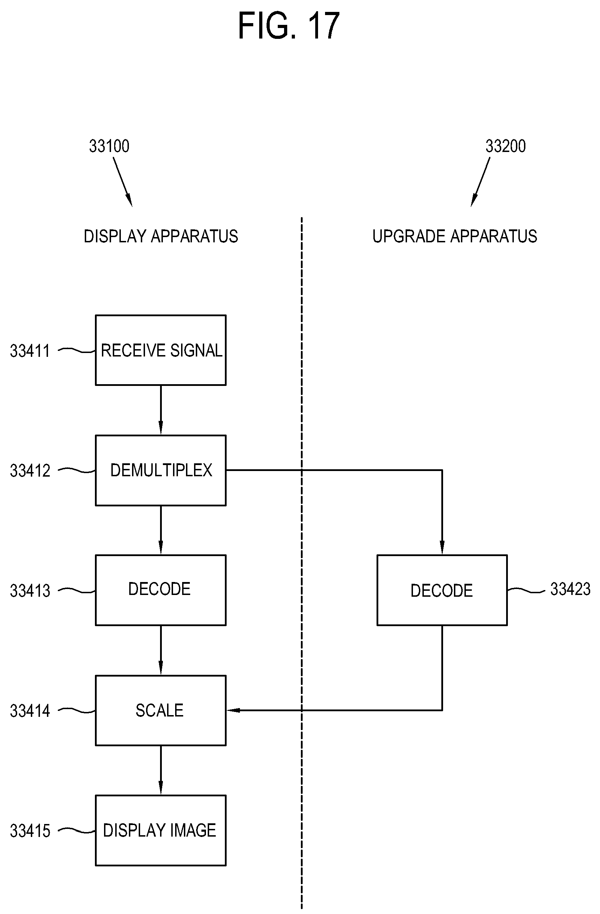

Hereinafter, a case in which the display apparatus 33100 is upgraded by the upgrade apparatus 33200 will be described with reference to FIG. 17. FIG. 17 is a flowchart which illustrates a method for upgrading an image processing process of the display apparatus 33100 by using the upgrade apparatus 33200 in the display system 331 according to an exemplary embodiment.

As shown in FIG. 17, when receiving a signal, e.g., a broadcast signal, from the image source 33300 in operation 33411, the display apparatus 33100 processes the signal according to a preset sequence of image processing processes 33412, 33413 and 33414. It should be noted that FIG. 17 illustrates only some image processing processes 33412, 33413 and 33414 for concise description of the present exemplary embodiment, not showing all image processing processes which may be actually implemented by the display apparatus 33100.

The display apparatus 33100 performs demultiplexing to separate the received broadcast signal into an image signal, an audio signal, and optional data in operation 33412. The display apparatus 33100 processes the respective demultiplexed signals, for example, decodes the image signal into a preset image format in operation 33413. The display apparatus 33100 scales the decoded image signal to a predetermined resolution so as to be displayed as an image on the display 33130 in operation 33414, and displays an image based on the scaled image signal in operation 33415.

Among these processes, the upgrade apparatus 33200 is provided to perform a process 33423 corresponding to the decoding process of the display apparatus 33100. The decoding process 33423 performed by the upgrade apparatus 33200 is the same in terms of action as the decoding process performed by the display apparatus 33100 but is functionally improved as compared with the decoding process 33413 of the display apparatus 33100. Thus, performing the decoding process 33423 instead of the decoding process 33413 improves a result of the image processing process.

For example, the decoding process 33423 can handle an image signal which has a high resolution or an image signal in a format which cannot be handled by the decoding process 33413, or apply an additional effect to an image signal, which additional effect would not be realized by performing the decoding process 33413.

Accordingly, in the sequence of the image processing processes according to the present exemplary embodiment, the decoding process 33423 of the upgrade apparatus 33200 is executed after demultiplexing 33412, instead of the decoding process 33413 of the display apparatus 33100, based on a control by the first controller 33160 or the second controller 33260. After the decoding process 33423 of the upgrade apparatus 33200, the scaling process of operation 33414 is executed.

According to this sequence, transmission/reception of image signals and control signals is executed between the display apparatus 33100 and the upgrade apparatus 33200, which is realized according to control by the first controller 33160 or the second controller 33260.

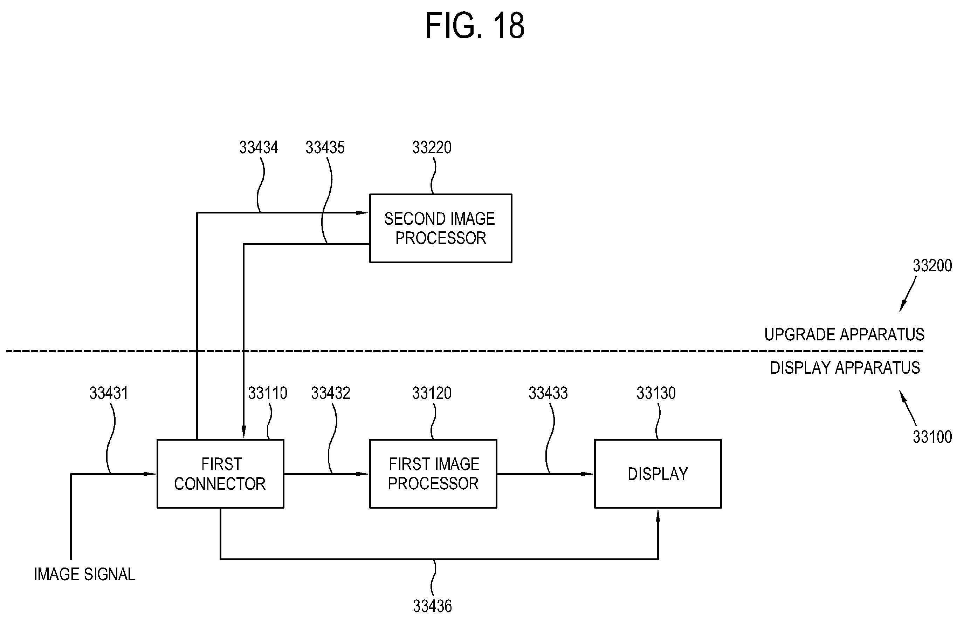

Unlike in FIG. 17 where part of the image processing processes is replaced, the second image processor 33220 of the upgrade apparatus 33200 may replace the first image processor 33120 of the display apparatus 33100, which will be described with reference to FIG. 18. FIG. 18 is a block diagram which illustrates a process for transmitting an image signal received by the first connector 33110 in the display system 331 according to an exemplary embodiment.

As shown in FIG. 18, when the upgrade apparatus 33200 is not connected to the display apparatus 33100, an image signal is received by the first connector 33110 in operation 33431 and then transmitted to the first image processor 33120 in operation 33432. The first image processor 33120 processes the image signal and outputs the processed signal to the display 33130 in operation 33433, and accordingly, the display 33130 displays an image based on the image signal processed by the first image processor 33120.

Further, when the upgrade apparatus 33200 is connected to the display apparatus 33100, an image signal is received by the first connector 33110 in operation 33431 and then transmitted to the second image processor 33220, not to the first image processor 33120, in operation 33434. The second image processor 33220 performs an image processing process on the image signal instead of the first image processor 33120, and the image signal processed by the second image processor 33220 is transmitted back to the display apparatus 33100 in operation 33435.

The image signal is then transmitted to the display 33130, bypassing the first image processing unit 33120, in operation 33436, and accordingly, the display 33130 displays an image based on the image signal processed by the second image processor 33220.

In addition, when the display apparatus 33100 and the upgrade apparatus 33200 are connected, the second controller 33260 may disable the first controller 33160 and control the first image processor 33120 and the second image processor 33220. Alternatively, when the operating system stored in the second storage 33250 is a more upgraded version than the operating system stored in the first storage 33150, the operating system of the first storage 33150 may be updated to the operating system of the second storage 33250 to run the updated operating system, or the operating system of the second storage 33250 may be run instead of the operating system of the first storage 33150.

With this configuration, the upgrade apparatus 33200 according to the present exemplary embodiment may upgrade the display apparatus 33100.

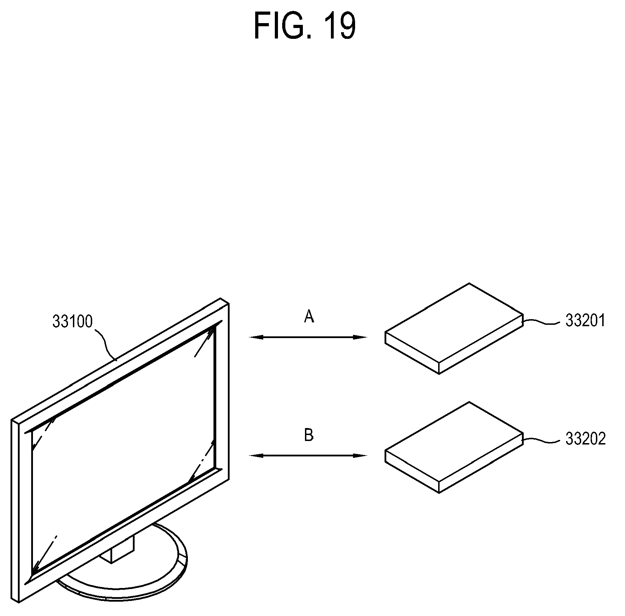

Further, in a structure of the display apparatus 33100 and the upgrade apparatus 33200, a plurality of upgrade apparatuses 33201 and 33202 may be alternatively used for one display apparatus 33100. FIG. 19 illustrates a configuration in which two upgrade apparatuses 33201 and 33202 are selectively connected to the display apparatus 33100.

As shown in FIG. 19, any one of a first upgrade apparatus 33201 and a second upgrade apparatus 33202 may be selectively connected to the display apparatus 33100 for upgrading thereof. Configurations of the first upgrade apparatus 33201 and the second upgrade apparatus 33202 are substantially the same as that of the upgrade apparatus 33200 described with reference to FIG. 16, and detailed descriptions thereof will be omitted herein.

When a user connects the first upgrade apparatus 33201 to the display apparatus 33100 (A), the first upgrade apparatus 33201 upgrades the display apparatus 33100. In particular, the first upgrade apparatus 33201 performs an upgrade operation based on configuration information autonomously stored therein.

The configuration information may include various types of data/information used in the display system 331, for example, a user profile, configuration settings of the display apparatus 33100 set up by a user, applications installed in the display apparatus 33100 by a user, a list of broadcast channels, or the like. In particular, the configuration information may include general information which is required for operating the display system 331, without being limited to particular kinds of information or data.

While the upgrade is performed by the first upgrade apparatus 33201 when the first upgrade apparatus 33201 and the display apparatus 33100 are connected, the configuration information stored in the first upgrade apparatus 33201 may be changed by various factors.

The configuration information may be modified variously, for example, by changing a user profile, adjusting a brightness level or sound level of a displayed image, installing a new application, deleting an installed application, or changing a list of favorite channels of a user.

When the configuration information is changed during the upgrade, the first upgrade apparatus 33201 autonomously stores the changed configuration information. The configuration information is stored in a memory (see 33250 in FIG. 16) of the first upgrade apparatus 33201 by the first controller 33160 of the display apparatus or a second controller (see 33260 of FIG. 16) of the first upgrade apparatus 33201.

When the first upgrade apparatus 33201 and the display apparatus 33100 are disconnected and then reconnected (A), the first upgrade apparatus 33201 performs an upgrade based on the pre-stored configuration information. Accordingly, the display system 331 may provide a user with usage environment which has been changed by the user without requiring further updates to the usage environment, even when the first upgrade apparatus 33201 and the display apparatus 33100 are once disconnected and then reconnected.

However, after the first upgrade apparatus 33201 is disconnected from the display apparatus 33100, the second upgrade apparatus 33202 may be connected to the display apparatus 33100, instead of the first upgrade apparatus 33202 (B). In this case, the second upgrade apparatus 33202 performs an upgrade based on configuration information autonomously stored therein.

However, the configuration information in the second upgrade apparatus 33202 is changed in operation A, that is, during the upgrade by the first upgrade apparatus 33201, and thus is different from the configuration information stored in the first upgrade apparatus 33201. Thus, because the configuration information changed in operation A cannot be used in subsequent operation B, a usage environment for the display system 331 configured in operation A is not maintained but is reset in operation B.

Accordingly, in the present exemplary embodiment, the first controller 33160 stores the configuration information, which was changed during the upgrade operation A by the first upgrade apparatus 33201 and stored in the first upgrade apparatus 33201, in the first storage 33150 of the display apparatus 33100. Then, when the second upgrade apparatus 33202 is connected to the first connector 33110, the first controller 33160 updates the configuration information pre-stored in the second upgrade apparatus 33202 to the configuration information stored in the first storage 33150, thereby enabling the second upgrade apparatus 33202 to perform an upgrade operation based on the updated configuration information.

Accordingly, even though the second upgrade apparatus 33202 replaces the first upgrade apparatus 33201 with respect to connection to the display apparatus 33100, the same usage environment as provided in the first upgrade apparatus 33201 may be also provided in the second upgrade apparatus 33202.

In the present exemplary embodiment, the first controller 33160 of the display apparatus 33100 is responsible for changing and storing, backing up, and updating the configuration information, without being limited thereto. Any of the display apparatus 33100, the first upgrade apparatus 33201, and the second upgrade apparatus 33202 may be responsible for the foregoing operations based on a design.

For example, when the display apparatus 33100 and the first upgrade apparatus 33201 are connected, the second controller (see 33260 of FIG. 16) of the first upgrade apparatus 33201 may be responsible for storing the changed configuration information in the first upgrade apparatus 33201 and the display apparatus 33100. Alternatively, when the display apparatus 33100 and the second upgrade apparatus 33202 are connected, a second controller (see 33260 of FIG. 16) of the second upgrade apparatus 33202 may be responsible for updating the configuration information pre-stored in the second upgrade apparatus 33202 to the configuration information stored in the display apparatus 33100.

In the present exemplary embodiment, the respective second controllers (see 33260 of FIG. 16) of the first upgrade apparatus 33201 and the second upgrade apparatus 33202 do not refer to the same elements, but an element corresponding to the second controller 33260 of FIG. 16 is provided in each of the first upgrade apparatus 33201 and the second upgrade apparatus 33202.

In addition, an operation of storing the configuration information in the display apparatus 33100 when the first upgrade apparatus 33201 and the display apparatus 33100 are connected may be performed in real time based on a change in the configuration information or when a particular event occurs.

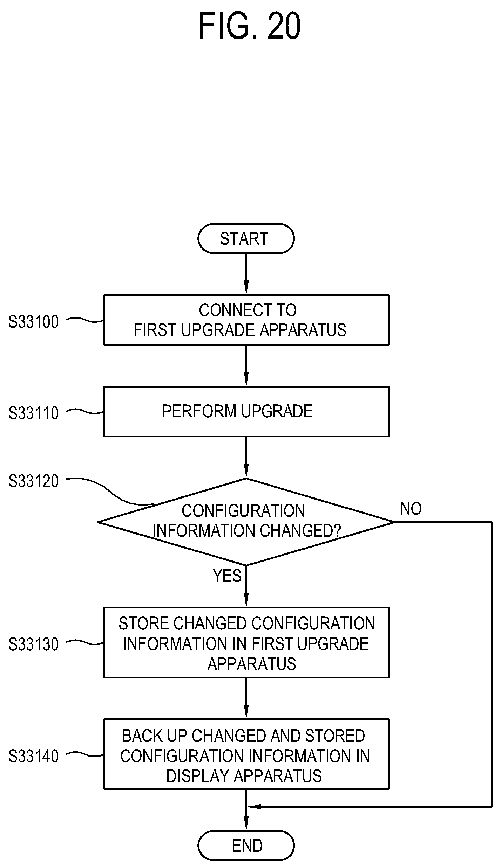

Hereinafter, a method for storing configuration information in real time based on a change in the configuration information when the first upgrade apparatus 33201 and the display apparatus 33100 are connected will be described with reference to FIG. 20. FIG. 20 is a flowchart which illustrates a process for storing configuration information, wherein an initial state of the process is defined as no configuration information being stored in the display apparatus 33100.

As shown in FIG. 20, when the first upgrade apparatus 33201 is connected to the display apparatus 33100 in operation S33100, the first upgrade apparatus 33201 upgrades the display apparatus 33100 based on configuration information autonomously stored therein in operation S33110.

When a determination that the configuration information has changed during the upgrade is made in operation S33120, the display apparatus 33100 stores the changed configuration information in the first upgrade apparatus 33201 in operation S33130. Then, the display apparatus 33100 stores the changed configuration information, that is, the configuration information currently stored in the first upgrade apparatus 33201, in the display apparatus 33100 in operation S33140.

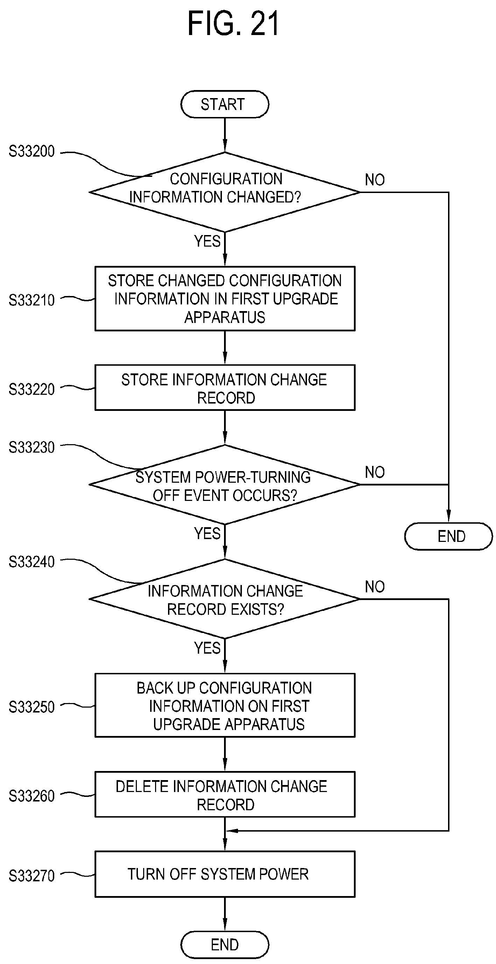

A method for storing configuration information based on a particular event when the first upgrade apparatus 33201 and the display apparatus 33100 are connected will be described with reference to FIG. 21. FIG. 21 is a flowchart which illustrates a process for storing configuration information, wherein an initial state of the process is defined as a state in which operation S33110 has been completed.

As shown in FIG. 21, when a determination is made that the configuration information has been changed during an upgrade performed by using the first upgrade apparatus 33201 in operation S33200, the display apparatus 33100 stores the changed configuration information in the first upgrade apparatus 33201 in operation S33210. Then, the display apparatus 33100 stores an information change record which indicates that the configuration information has been changed in operation S33220.

When a determination is made that a particular event, such as, for example, turning off system power, occurs as a result of input received by the user input unit 33140 in operation S33230, the display apparatus 33100 determines whether the information change record has been stored in operation S33240.

When a positive determination that the information change record has been stored is made, the display apparatus 33100 stores the configuration information relating to the first upgrade apparatus 33201 in the display apparatus 33100 in operation S33250. When operation S33250 has been completed, the display apparatus 33100 deletes the information change record in operation S33260 and turns off the system power in operation S33270.

However, when a determination is made in operation S33240 that the information change record has not been stored, the display apparatus 33100 simply turns off the system power in operation S33270.

According to this process, the configuration information which has been changed and stored in the first upgrade apparatus 33201 may be stored in the display apparatus 33100.

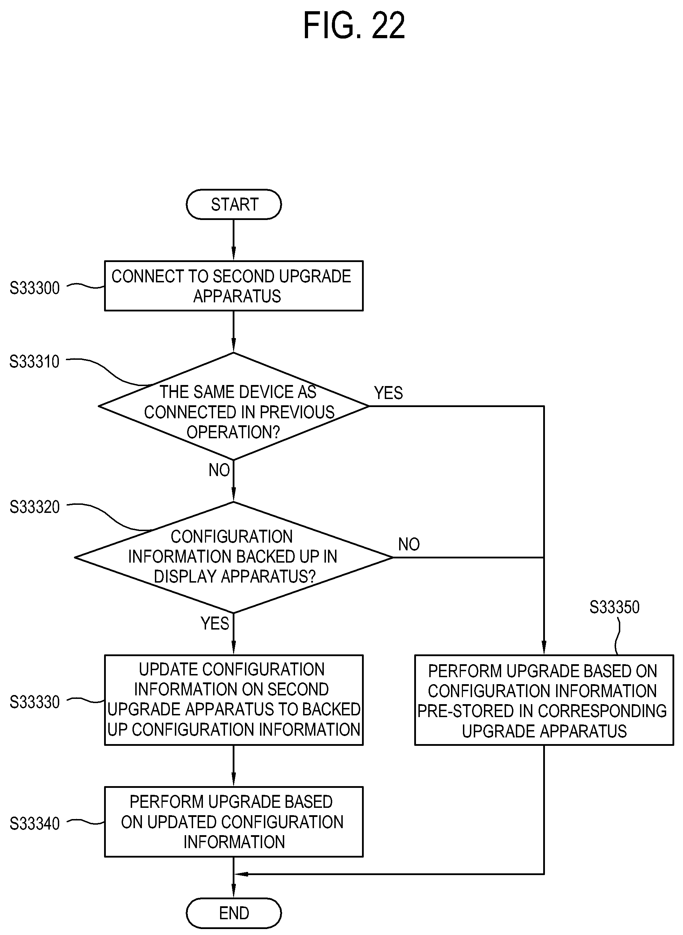

Hereinafter, a method for performing an upgrade when the second upgrade apparatus 33202 is connected to the display apparatus 33100, with the configuration information relating to the first upgrade apparatus 33201 stored in the display apparatus 33100, will be described with reference to FIG. 22. FIG. 22 is a flowchart which illustrates a process for performing an upgrade.

As shown in FIG. 22, when the second upgrade apparatus 33202 is connected in operation S33300, the display apparatus 33100 determines whether the connected second upgrade apparatus 33202 is a same device as a device which was connected in a previous operation in operation S33310.

In particular, the previous operation refers to an operation in which the upgrade apparatus 33201 is connected just before the second upgrade apparatus 33202 is connected in operation S33300, that is, an operation in which the first upgrade apparatus 33201 and the display apparatus 33100 are connected in order to perform an upgrade.

Each of the first upgrade apparatus 33201 and the second upgrade apparatus 33202 includes respective individual identification information. When the first upgrade apparatus 33201 is connected to the display apparatus 33100, the display apparatus 33100 acquires and stores identification information from the first upgrade apparatus 33201. The display apparatus 33100 compares the pre-stored identification information relating to the first upgrade apparatus 33201 with newly acquired identification information relating to the second upgrade apparatus 33202 in operation S33310, thereby determining whether the upgrade apparatus newly connected in operation S33300 is the first upgrade apparatus 33201 connected in the previous operation or the new second upgrade apparatus 33202.

Alternatively, when the second upgrade apparatus 33202 is responsible for operation S33310, the second upgrade apparatus 33202 acquires identification information relating to the display apparatus 33100. When a display apparatus 33100 is connected, one of the first upgrade apparatus 33201 or the second upgrade apparatus 33202 acquires identification information relating to the newly connected display apparatus 33100 and compares the identification information relating to the newly connected display apparatus 33100 with the pre-stored identification information, thereby determining whether the new display apparatus 33100 is the same device as the previously connected display apparatus 33100.

When the display apparatus 33100 determines the newly connected second upgrade apparatus 33202 is different from the previously connected first upgrade apparatus 33201, the display apparatus 33100 may determine whether there is configuration information stored in the display apparatus 33100 in operation S33320.

When there is the stored configuration information in the display apparatus 33100, the display apparatus 33100 updates pre-stored configuration information in the second upgrade apparatus 33202 to the configuration information stored in the display apparatus 33100 in operation S33330. Accordingly, the second upgrade apparatus 33202 performs an upgrade based on the updated configuration information in operation S33340.

In addition, when the second upgrade apparatus 33202 is determined as being the same device as a device which was connected in the previous operation in operation S33310, or when a determination is made that there is no configuration information stored in the display apparatus 33100 in operation S33320, the display apparatus 33100 performs an upgrade based on configuration information pre-stored in the upgrade apparatuses 33201 and 33202 in operation S33350.

Further, the display apparatus 33100 may additionally determine whether the second upgrade apparatus 33202 is an illegal product or has a compatibility problem with respect to the display apparatus 33100 in operation S33310. When such a problem exists, the display apparatus 33100 may inform a user of the problem by displaying a preset error message.

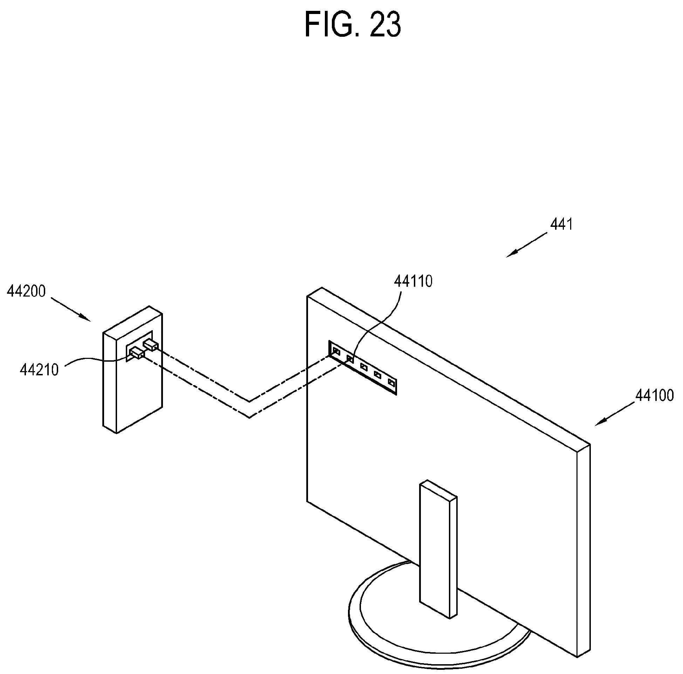

FIG. 23 illustrates a display system 441 according to an exemplary embodiment. As shown in FIG. 23, the display system 441 according to the present exemplary embodiment includes a display apparatus 44100 which processes an image signal provided from an external image source (not shown) according to a preset image processing process and displays an image based on the processed image signal, and an upgrade apparatus 44200 which is configured for upgrading hardware/software of the display apparatus 44100. In the present exemplary embodiment, descriptions of equivalent or similar components of the display apparatus 44100 to those of the display apparatuses 1, 2210 and 33100 described with reference to FIGS. 1 to 22 will be omitted herein.

In the system 441 of the present exemplary embodiment, the display apparatus 44100 is configured as a TV which displays broadcast images based on broadcast signals/broadcast information/broadcast data received from a transmitter of a broadcasting station. However, the display apparatus 44100 may be configured as at least one of various types of devices which are capable of displaying images, without being limited to a TV.

The display apparatus 44100 may display any image, without being limited to broadcast images. For example, the display apparatus 44100 may display images, such as videos, still images, applications, on-screen display (OSD) based on signals/data received from various types of image sources (not shown), and graphic user interface (GUI) for controlling various operations.

The upgrade apparatus 44200 is connected to the display apparatus 44100 in order to enable communication therebetween. The upgrade apparatus 44200 upgrades existing hardware/software of the connected display apparatus 44100 and enables an image signal to be processed by the upgraded hardware/software of the display apparatus 44100, thereby displaying an image which has improved quality.

The upgrade apparatus 44200 may be connected to the display apparatus 44100 via a cable or wirelessly. In the present exemplary embodiment, the upgrade apparatus 44200 is connected to the display apparatus 44100 via a cable, thereby enabling transmission and reception of data/information/signals/power between the upgrade apparatus 44200 and the display apparatus 44100. The display apparatus 44100 and the upgrade apparatus 44200 respectively include connectors/terminals 44110 and 44210 for physical/electrical connection to each other.

Alternatively, the upgrade apparatus 44200 may be connected to the display apparatus 44100 wirelessly. In this case, the upgrade apparatus 44200 is supplied with operating power from a separate external power source or battery. However, the present exemplary embodiment is described with reference to a case in which the upgrade apparatus 44200 is connected to the display apparatus 44100 via a cable.

The display apparatus 44100 may solely process an image signal received from the outside by using a preset image processing process and display an image based on the processed image signal. In the present exemplary embodiment, however, as the display apparatus 44100 and the upgrade apparatus 44200 are connected, hardware/software of the display system 441 which is used for performing the image processing process is upgraded, thereby providing a user with an image which has relatively improved quality.

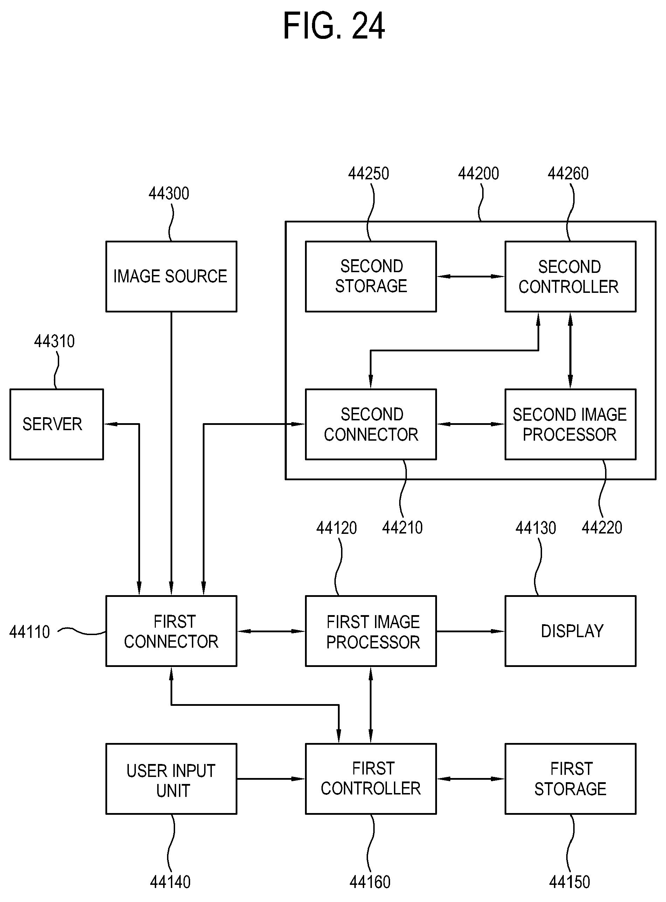

Hereinafter, configurations of the display apparatus 44100 and the upgrade apparatus 44200 will be described with reference to FIG. 24. FIG. 24 is a block diagram which illustrates the respective configurations of the display apparatus 44100 and the upgrade apparatus 44200 which constitute the display system 441.

As shown in FIG. 24, the display apparatus 44100 includes a first connector 44110 to which at least one image source 44300 is connected, a first image processor 44120 which processes an image signal received from the image source 44300 via the first connector 44110, a display 44130 which displays an image based on an image signal processed by the first image processor 44120, a user input unit 44140 which outputs a preset command in response to manipulation by a user, a first storage 44150 which stores unlimited data/information, and a first controller 44160 which generally controls operations of components of the display apparatus 44100.

The first connector 44110 transmits an image signal received from the at least one image source 33300 to the first image processor 44120 and is configured as at least one of various types which respectively correspond to respective standards of received image signals or kinds of the image source 44300 and the display apparatus 44100. For example, the first connector 44110 may receive signals/data in accordance with the high definition multimedia interface (HDMI), USB, and component standards and include a plurality of connection terminals (not shown) which correspond to the respective standards. At least one of various external devices, including the image source 44300, may be connected to the connection terminals, thus enabling communication via the first connector 44110.

In particular, any external device which is capable of transmitting and receiving signals/data to and from the display apparatus 44100 via the first connector 44110 may be connected to the first connector 44110, without being limited to the image source 44300. In the present exemplary embodiment, the upgrade apparatus 44200 may be connected to the first connector 44110.

Further, an external device may be connected to the first connector 44110 in any mode from among a local mode and a network mode. In the present exemplary embodiment, the first connector 44110 is connected to a preset communication protocol-based network in order to enable communication therewith, thus enabling two-way communication with a server 44310 via the network.

The first image processor 44120 performs at least one of various preset image processing processes upon an image signal which has been received via the first connector 44110. The first image processor 44120 outputs a processed image signal to the display 44130, so that an image based on the image signal may be displayed on the display 44130.

The first image processor 44120 may perform any type of image processing, without being limited to, for example, a demultiplexing process for separating a signal into characteristic signals, a decoding process which relates to an image format of an image signal, a de-interlacing process for converting an interlaced image signal into a progressive form, a scaling process for adjusting a resolution of an image signal to a preset resolution, a noise reduction process for improving image quality, a detail enhancement process, a frame refresh rate conversion process, or the like.

The first image processor 44120 may be provided as an image processing board (not shown) in which each of a circuit system which includes at least one of various chip sets (not shown) which are configured for conducting such processes, a memory (not shown), electronic components (not shown) and wiring (not shown), is mounted on a PCB (not shown).

The display 44130 displays an image which is based on an image signal output from the first image processor 44120. The display 44130 may be configured as at least one of various display types using liquid crystals, plasma, light emitting diodes, organic light emitting diodes, a surface conduction electron emitter, a carbon nano-tube, nano-crystals, or the like, without being limited thereto.

The display 44130 may further include an additional element depending on a display mode thereof. For example, in a display mode using liquid crystals, the display 44130 may include at least one of a liquid crystal display (LCD) panel, a backlight unit (not shown) which provides light to the panel, and a panel drive board (not shown) which drives the panel.

The user input unit 44140 transmits various preset control commands or unlimited information to the first controller 44160 in response to at least one of manipulation and input received from a user. The user input unit 44140 may be configured, for example, as a menu key and an input panel which is installed on an outside of the display apparatus 44100, or as a remote controller which is physically separate from the display apparatus 44100.

Alternatively, the user input unit 44140 may be integrally configured as a single body with the display 44130. In particular, if the display 44130 includes a touch screen, a user may transmit a preset command to the first controller 44160 via an input menu (not shown) which is displayed on the display 44130.

The first storage 44150 stores unlimited data based on a control which is executed by the first controller 44160. The first storage 44150 may be configured as a nonvolatile memory, such as, for example, at least one of a flash memory and a hard disk drive. The first storage 44150 may be accessed by the first controller 44160, and the data stored in the first storage 44150 may be read/recorded/revised/deleted/updated by the first controller 44160.

The first storage 44150 may store, for example, an operating system for operating the display apparatus 44100, and various applications, image data and optional data which are executable by using the operating system.

The first controller 44160 performs control operations of various components of the display apparatus 44100. For example, the first controller 44160 may conduct one or more of an image processing process of the first image processor 44120, transmission and reception of signals/information/data via the first connector 44110, and a control operation in response to a command received via the user input unit 44140, thereby controlling general operations of the display apparatus 44100.

The display apparatus 44100 having the foregoing configuration may require upgrading over time due to various factors including technology development. Upgrading may be necessary for various cases, such as, for example, to receive an image signal in a new format which was not contemplated when the display apparatus 44100 was first manufactured, or to receive an image signal which has a higher resolution than a resolution which was supported solely by the display apparatus 44100 in view of a trend towards a demand for high-quality images, or to reduce a system load of the display apparatus 44100.

Upgrading the display apparatus 44100 may be executed with respect to either or both of hardware and software. In the present exemplary embodiment, the upgrade apparatus 44200 which is configured for upgrading the display apparatus 44100 is connected to the first connector 44110, thereby upgrading at least one of the existing hardware and software configurations of the display apparatus 44100.

The upgrade apparatus 44200 includes hardware/software configurations which respectively correspond to at least part of respective hardware/software resources of the display apparatus 44100. These hardware/software configurations of the upgrade apparatus 44200 are provided in order to perform more improved functions than the at least part of the resources of the display apparatus 44100. When the upgrade apparatus 44200 is connected to the display apparatus 44100, the hardware/software configurations of the upgrade apparatus 44200 replace at least part of the existing resources of the display apparatus 44100, thereby ultimately improving quality of an image which may be displayed on the display apparatus 44100.

Hereinafter, the configuration of the upgrade apparatus 44200 will be described.

The upgrade apparatus 44200 includes a second connector 44210 which is connected to the first connector 44110 of the display apparatus 44100, a second image processor 44220 which is capable of performing respective processes which correspond to at least part of the image processing processes of the first image processor 44120, a second storage 44250 which stores unlimited data/information, and a second controller 44260 which controls general operations of the upgrade apparatus 44200.

The second connector 44210 is connected to the first connector 44110, thereby enabling communication between the upgrade apparatus 44200 and the display apparatus 44100. The second connector 44210 may be configured in accordance with a standard which corresponds to the first connector 44110 so as to connect to the first connector 44110 and be connected to at least one of the connection terminals (not shown) of the first connector 44110.

For example, the second connector 44210 may be connected to an HDMI terminal (not shown) for transmission and reception of image signals between the display apparatus 44100 and the upgrade apparatus 44200, or be connected to a USB terminal (not shown) for transmission and reception of data and power. However, the first connector 44110 and the second connector 44210 may be connected in any of various modes, without being limited to the above examples.

The second image processor 44220 may perform a second process which corresponds to a first process, which is part of the processes performed by the first image processor 44120 of the display apparatus 44100. The terms "first process" and "second process" are named only for convenience to distinguish processes from each other, and such processes may include a single unit process or a plurality of unit processes. The second process is functionally improved as compared with the first process and is achieved by upgrading hardware, such as a chip set, or software, such as algorithms/executable codes/programs.

The second image processor 44220 performs the second process, instead of the first process, based on a control performed by the first controller 44160 or the second controller 44260 when the display apparatus 44100 and the upgrade apparatus 44200 are connected. In this manner, the second process, which represents an improvement as compare with the first process, is implemented instead of the first process, thereby enhancing the image processing process overall, which will be described.

The second storage 44250 stores unlimited data. The second storage 44250 may be configured as a nonvolatile memory, such as, for example, at least one of a flash memory and a hard disk drive. The second storage 44250 may be accessed by the first controller 44160 or the second controller 44260, and the data stored in the second storage 44250 may be read/recorded/revised/deleted/updated by these controllers 44160 or 44260. Further, the first storage unit 44150 may also be accessed by not only the first controller 44160, but also by the second controller 44260, depending on a configuration thereof.

The second controller 44260 controls a connection between the display apparatus 44100 and the upgrade apparatus 44200 which is used for performing a general image processing process. The second controller 44260 and the first controller 44160 may be configured as a CPU. Thus, if the second controller 44260 performs an improved function as compared with a corresponding function of the first controller 44160, the second controller 44260 may disable the first controller 44160 and control general operations of the display system 441 by acting as a replacement for the first controller 44160. Alternatively, the second controller 44260 may jointly control the general operations of the display system 441 in conjunction with the first controller 44160.

In addition, when the display apparatus 44100 and the upgrade apparatus 44200 are connected, the second controller 44260 may disable the first controller 44160 and control the first image processor 44120 and the second image processor 44220. Alternatively, when the operating system which is stored in the second storage 44250 represents an upgraded version of the operating system which is stored in the first storage 44150, the operating system of the first storage 44150 may be updated by replacing same with the operating system of the second storage 44250 in order to run the updated operating system, or the operating system of the second storage 44250 may be executed instead of executing the operating system of the first storage 44150.

With this configuration, the upgrade apparatus 44200 according to the present exemplary embodiment may upgrade the display apparatus 44100.

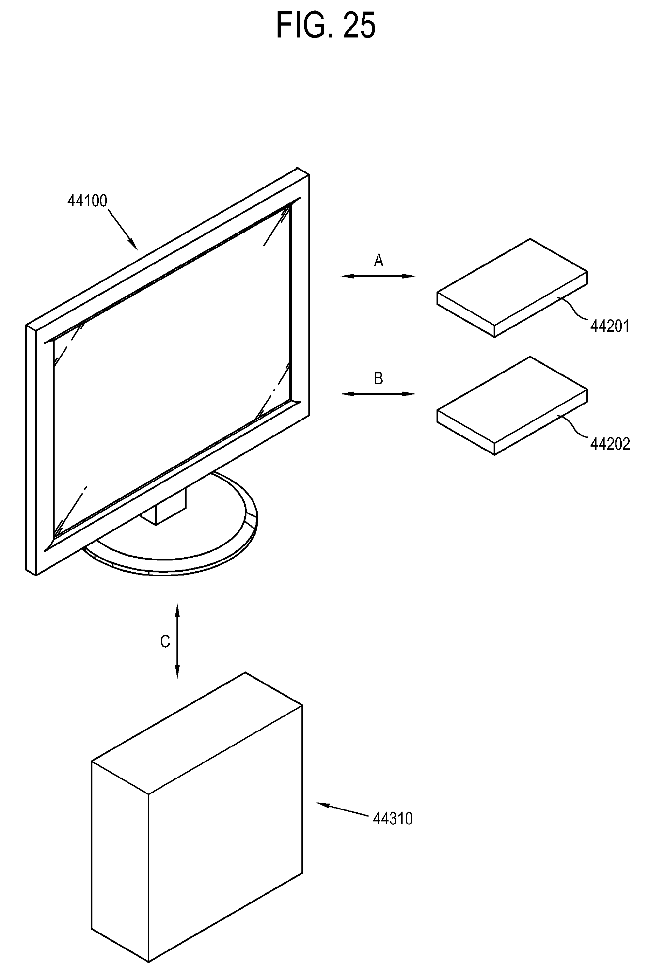

Further, in a structure of the display apparatus 44100 and the upgrade apparatus 44200, a plurality of upgrade apparatuses 44201 and 44202 may be alternatively used in conjunction with one display apparatus 44100. FIG. 25 illustrates a configuration in which two upgrade apparatuses 44201 and 44202 are selectively connected to the display apparatus 44100.

As shown in FIG. 25, any one of a first upgrade apparatus 44201 and a second upgrade apparatus 44202 may be selectively connected to the display apparatus 44100 for performing an upgrade. Configurations of the first upgrade apparatus 44201 and the second upgrade apparatus 44202 are substantially the same as that of the upgrade apparatus 44200 which is described above with reference to FIG. 24, and detailed descriptions thereof will be omitted herein.

When a user connects the first upgrade apparatus 44201 to the display apparatus 44100 (A), the first upgrade apparatus 44201 upgrades the display apparatus 44100. In particular, the first upgrade apparatus 44201 performs an upgrade operation based on setting information autonomously stored therein.

The setting information may include any or all of various types of data/information used in the display system 441, for example, a user profile, configuration settings of the display apparatus 44100 set up by a user, applications installed in the display apparatus 44100 by a user, a list of broadcast channels, or the like. In particular, the setting information may include general information which is required for operating the display system 441, without being limited to particular kinds of information or data.

While the upgrade is performed by the first upgrade apparatus 44201 when the first upgrade apparatus 44201 and the display apparatus 44100 are connected, the setting information stored in the first upgrade apparatus 44201 may be changed by one or more of various factors.

The setting information may be modified in any one or more of various ways, for example, by changing a user profile, adjusting a brightness level or sound level of a displayed image, installing a new application, deleting an installed application, or changing a list of favorite channels of a user.

When the setting information is changed during the upgrade, the first upgrade apparatus 44201 autonomously stores the changed setting information. The setting information is stored in a memory (see 44250 in FIG. 24) of the first upgrade apparatus 44201 by the first controller 44160 of the display apparatus 44100 or a second controller (see 44260 of FIG. 16) of the first upgrade apparatus 44201.

When the first upgrade apparatus 44201 and the display apparatus 44100 are disconnected and then reconnected (A), the first upgrade apparatus 44201 performs an upgrade based on the pre-stored setting information. Accordingly, the display system 441 may provide a user with usage environment which has been changed by the user without requiring further updates to the usage environment, even when the first upgrade apparatus 44201 and the display apparatus 44100 are once disconnected and then reconnected.

However, after the first upgrade apparatus 44201 is disconnected from the display apparatus 44100, the second upgrade apparatus 44202 may be connected to the display apparatus 44100, instead of the first upgrade apparatus 44202 (B). In this case, the second upgrade apparatus 44202 performs an upgrade based on setting information autonomously stored therein.

However, the setting information in the second upgrade apparatus 44202 has been changed in operation A, that is, during the upgrade by the first upgrade apparatus 44201, and thus is different from the setting information stored in the first upgrade apparatus 44201. Thus, because the setting information changed in operation A cannot be used in subsequent operation B, a usage environment for the display system 441 as configured in operation A is not maintained, but is instead reset in operation B.

Accordingly, in the present exemplary embodiment, the display apparatus 44100 operates as follows.

The display apparatus 44100 is connected to an additional external device 44310 for communication therewith (C), in addition to being connected to at least one of the first upgrade apparatus 44201 and the second upgrade apparatus 44202.

The display apparatus 44100 stores the setting information, which is changed during the upgrade operation (A) by the first upgrade apparatus 44201 and stored in the first upgrade apparatus 44201, in the additional external device 44310. Then, when the second upgrade apparatus 44202 replaces the first upgrade apparatus 44201 with respect to connection to the display apparatus (B), the display apparatus 44100 updates the setting information which is pre-stored in the second upgrade apparatus 44202 to the setting information which is stored in the external device 44310 so that an upgrade is performed based on the setting information which is stored in the external device 44310 via access to the external device 44310 (C), thereby enabling the second upgrade apparatus 44202 to perform an upgrade based on the updated setting information.

Accordingly, even though the second upgrade apparatus 44202 replaces the first upgrade apparatus 44201 with respect to connection to the display apparatus 44100, the same usage environment which is provided with respect to the first upgrade apparatus 44201 may be also provided with respect to the second upgrade apparatus 44202.

In particular, in the present exemplary embodiment, the external device 44310 is illustrated as a server 44310 which is connected to the display apparatus 44100 via a network, without being limited thereto. For example, the external device 44310 may be configured as any one or more of various types of electronic devices or storage devices which may be locally connected to the display apparatus 44100. Further, the external device 44310 may be connected to at least one of the upgrade apparatuses 44201 and 44202, and not directly connected to the display apparatus 44100.

In the present exemplary embodiment, the first controller 44160 of the display apparatus 44100 is responsible for changing and storing, backing up, and updating the setting information, without being limited thereto. Any of the display apparatus 44100, the first upgrade apparatus 44201, and the second upgrade apparatus 44202 may be responsible for the foregoing operations based on a design.

For example, when the display apparatus 44100 and the first upgrade apparatus 44201 are connected, the second controller (see 44260 of FIG. 24) of the first upgrade apparatus 44201 may be responsible for storing the changed setting information in the first upgrade apparatus 44201 and the external device 44310. Alternatively, when the display apparatus 44100 and the second upgrade apparatus 44202 are connected, a second controller (see 44260 of FIG. 24) of the second upgrade apparatus 44202 may be responsible for updating the setting information which is pre-stored in the second upgrade apparatus 44202 to the setting information which is stored in the external device 44130.

In the present exemplary embodiment, the respective second controllers (see 44260 of FIG. 24) of the first upgrade apparatus 44201 and the second upgrade apparatus 44202 do not refer to the same elements, but instead, an element which corresponds to the second controller 44260 of FIG. 24 is provided in each of the first upgrade apparatus 44201 and the second upgrade apparatus 44202.

In addition, an operation for storing the setting information in the external device 44310 when the first upgrade apparatus 44201 and the display apparatus 44100 are connected may be performed in real time in response to a change in the setting information or when a particular event occurs.

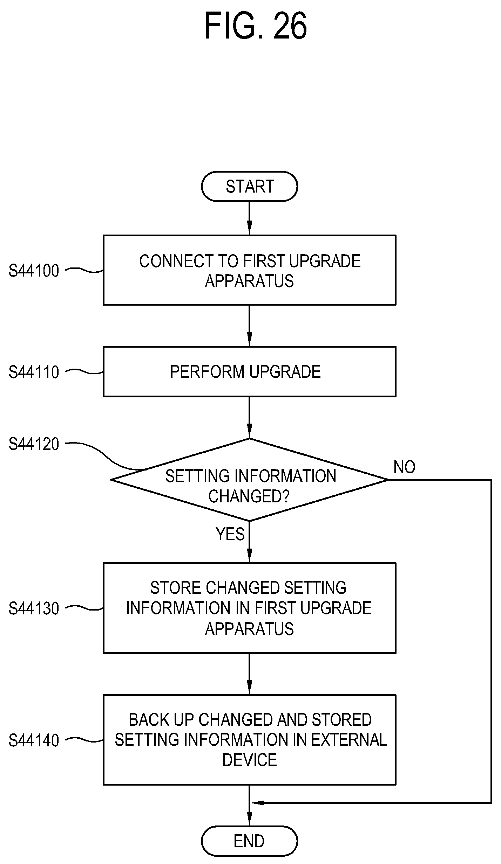

Hereinafter, a method for storing setting information in the external device 44310 in real time based on a change in the setting information when the first upgrade apparatus 44201 and the display apparatus 44100 are connected will be described with reference to FIG. 26. FIG. 26 is a flowchart which illustrates a process for storing setting information, wherein an initial state of the process is defined as referring to a state in which no setting information is stored in the external device 44310.

As shown in FIG. 26, when the first upgrade apparatus 44201 is connected to the display apparatus 44100 in operation S44100, the first upgrade apparatus 44201 upgrades the display apparatus 44100 based on setting information autonomously stored therein in operation S44110.

When a determination is made that the setting information has been changed during the upgrade in operation S44120, the display apparatus 44100 stores the changed setting information in the first upgrade apparatus 44201 in operation S44130. Then, the display apparatus 44100 stores the changed setting information, that is, the setting information which is currently stored in the first upgrade apparatus 44201, in the external device 44310 in operation S44140.

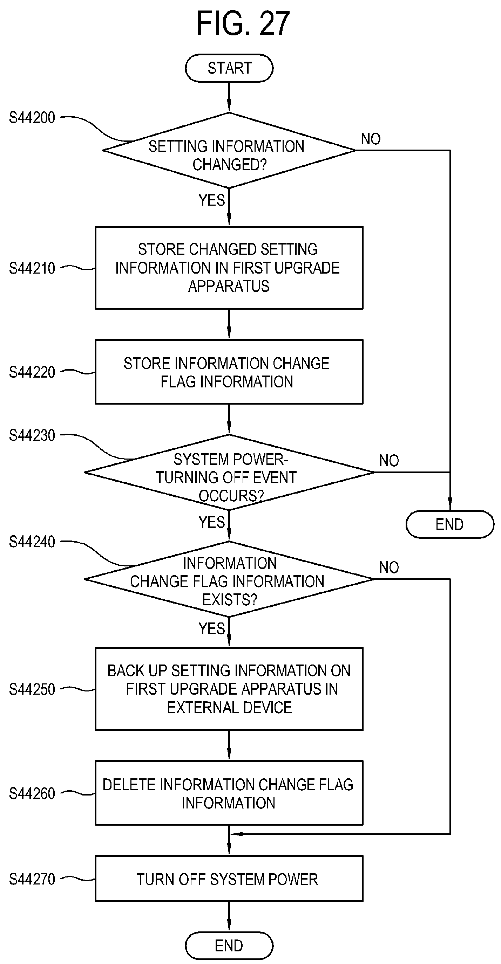

Further, a method for storing setting information based on an occurrence of a particular event when the first upgrade apparatus 44201 and the display apparatus 443100 are connected will be described with reference to FIG. 27. FIG. 27 is a flowchart which illustrates a process for storing setting information, wherein an initial state of the process is defined as a state in which operation S44110 of FIG. 26 has been completed.

As shown in FIG. 27, when a determination is made that the setting information has been changed during an upgrade using the first upgrade apparatus 44201 in operation S44200, the display apparatus 44100 stores the changed setting information in the first upgrade apparatus 44201 in operation S44210. Then, the display apparatus 44100 stores information change flag information which indicates that the setting information has been changed, that is, a record of setting information change, in operation S44220.

When a determination is made that a particular event, such as, for example, turning off system power, occurs as a result of input received by the user input unit 44140 in operation S44230, the display apparatus 44100 determines whether the information change flag information has been stored in operation S44240.

When the information change flag information has been stored, the display apparatus 44100 stores the setting information on the first upgrade apparatus 44201 in the external device 44310 in operation S44250. When the backup is completed, the display apparatus 44100 deletes the stored information change flag information in operation S44260 and then turns off the system power in operation S44270.

However, when a determination is made in operation S44240 that the information change flag information has not been stored, the display apparatus 44100 simply turns off the system power in operation S44270.

According to this process, the display apparatus 44100 may store the setting information which has been changed and stored in the first upgrade apparatus 44201 in the external device 44310.

In particular, when the setting information is stored in the external device 44310 by executing the methods shown in FIGS. 26 and 27, the display apparatus 44100 stores backup flag information which indicates that the setting information has been stored in the external device 44310 in the first storage 44150.

The backup flag information may be stored at any time, without being particularly limited, for example, just after the setting information is stored in the external device 44310 in operation S44140 of FIG. 26, or before the system power is turned off in operation S44270 of FIG. 27. The backup flag information indicates that the setting information has been stored in the external device 44310 in the first storage 44150 and includes communication address information relating to the external device 44310 in which the setting information has been stored.

The communication address information may include, for example, universal resource locator (URL) information relating to the setting information which has been stored in a server, when the external device 44310 is configured as the server.

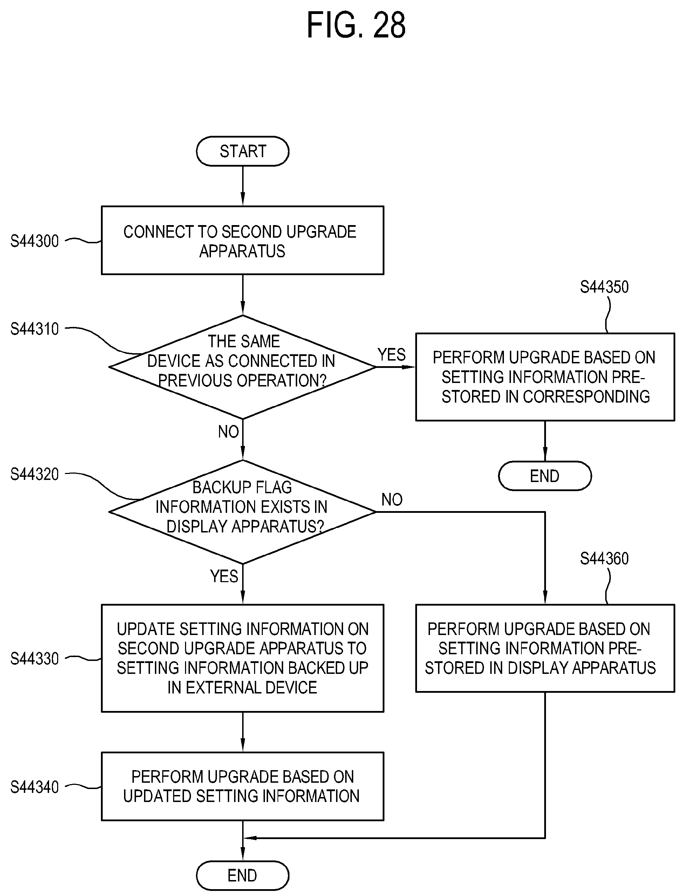

Hereinafter, a method for performing an upgrade when the second upgrade apparatus 44202 is connected to the display apparatus 44100, with the setting information relating to the first upgrade apparatus 44201 having been stored in the external device 44310 connected to the display apparatus 33100, will be described with reference to FIG. 28. FIG. 28 is a flowchart which illustrates a process for performing an upgrade.

As shown in FIG. 28, when the second upgrade apparatus 44202 is connected to the display apparatus 44100 in operation S44300, the display apparatus 44100 determines whether the connected second upgrade apparatus 44202 is a same device which was connected in a previous operation in operation S44310.

In particular, the previous operation refers to an operation in which the upgrade apparatus was connected just before the second upgrade apparatus 44202 was connected in operation S44300, that is, an operation in which the first upgrade apparatus 44201 and the display apparatus 44100 are connected in order to perform an upgrade.

Each of the first upgrade apparatus 44201 and the second upgrade apparatus 44202 includes respective individual identification information. When the first upgrade apparatus 44201 is connected to the display apparatus 44100, the display apparatus 44100 acquires and stores identification information relating to the first upgrade apparatus 44201. The display apparatus 44100 compares the pre-stored identification information relating to the first upgrade apparatus 44201 with newly acquired identification information relating to the second upgrade apparatus 44202 in operation S44310, thereby determining whether the upgrade apparatus newly connected in operation S44300 is a same device as the first upgrade apparatus 44201 connected in the previous operation or a same device as the new second upgrade apparatus 44202.

Alternatively, when the second upgrade apparatus 44202 is responsible for operation S44310, the second upgrade apparatus 44202 acquires identification information relating to the display apparatus 44100. When a display apparatus 44100 is connected, the first upgrade apparatus 44201 or the second upgrade apparatus 44202 acquires and stores identification information relating to the newly connected display apparatus 44100 and compares the identification information relating to the newly connected display apparatus 44100 with the pre-stored identification information, thereby determining whether the new display apparatus 44100 is a same device as the previously connected display apparatus 44100.

When the display apparatus 44100 determines that the newly connected second upgrade apparatus 44202 is different from the previously connected first upgrade apparatus 44201, the display apparatus 44100 may determine whether there is backup flag information which is stored in the display apparatus 44100 in operation S44320. As described above, the backup flag information includes information which indicates that the setting information has been stored in the external device 44310.

When a determination is made that there is the backup flag information which is stored in the display apparatus 44100, the display apparatus 44100 updates setting information in the second upgrade apparatus 44202 to the setting information which has been stored in the external deice 44310 by accessing the external device 44310 in operation S44330. Access to the setting information which is stored in the external device 44310 is conducted through an address path for communication which is included in the backup flag information.

When the update is completed, the display apparatus 44100 controls an upgrade to be performed by the second upgrade apparatus 44202 based on the updated setting information in operation S44340.

Conversely, when the second upgrade apparatus 44202 is determined as a same device which was connected in the previous operation in operation S44310, the display apparatus 44100 controls the upgrade to be performed based on pre-stored setting information which is stored in the second upgrade apparatus 44202 in operation S44350.

Further, when the display apparatus 44100 determines that there is no backup flag information in operation S44320, the display apparatus 44100 controls the upgrade to be performed by the second upgrade apparatus 44202 based on setting information autonomously pre-stored therein in operation S44360. Then, the display apparatus 44100 may store the setting information, which has been pre-stored in the display apparatus 44100, in the external device 44310.

In addition, the display apparatus 44100 may additionally determine whether the second upgrade apparatus 44202 is an illegal product or has a compatibility problem with respect to the display apparatus 44100 in operation S44310. When there is such a problem, the display apparatus 44100 may inform a user of the problem by displaying a preset error message.

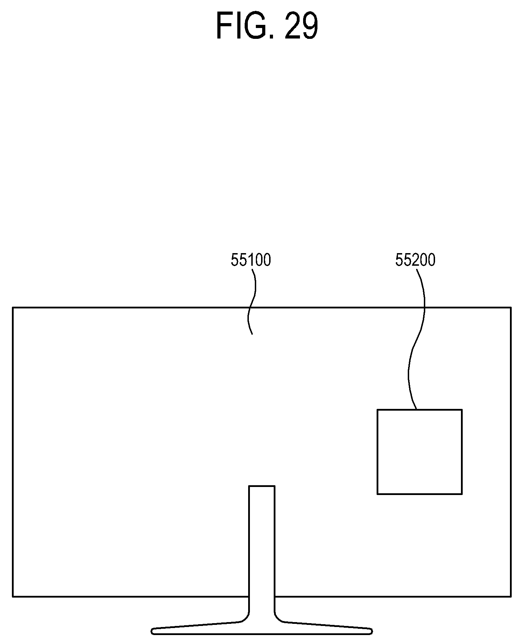

FIG. 29 schematically illustrates a display apparatus 55100 according to an exemplary embodiment. In the present exemplary embodiment, descriptions of equivalent or similar components of the display apparatus 55100 to those of the display apparatuses 1, 2210, 33100 and 44100 which are respectively described above with reference to FIGS. 1 to 28 will be omitted herein. The display apparatus 55100 may process an image signal which has been received from an external image source (not shown), or image data which has been internally stored based on a preset image processing process, in order to display an image and be connected with at least one upgrade apparatus 55200 which is configured for upgrading at least one of hardware or software of the display apparatus 55100.

The upgrade apparatus 55200 is configured for upgrading existing hardware/software configurations of the connected display apparatus 55100, and may include at least one of a memory to store software, such as application programs and middleware, and a CPU to run the software.

The upgrade apparatus 55200 performs part or all of functions to be performed by the display apparatus 55100, and may perform one or more of various functions which are not executable only by the display apparatus 55100.

For example, FIG. 29 illustrates the upgrade apparatus 55200 as being connected directly to the display apparatus 55100 via a connector provided on a rear side of the display apparatus 55100. However, the upgrade apparatus 55200 and the display apparatus 55100 may be also connected to each other by transmitting and receiving a signal therebetween by using known wired/wireless communications.

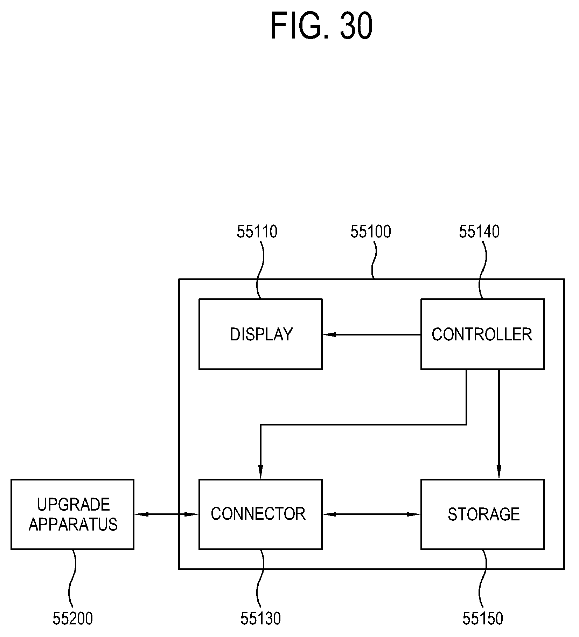

FIG. 30 is a block diagram which illustrates the display apparatus 55100. As shown in FIG. 30, the display apparatus 55100 includes a display 55110, a storage 55150, a connector 55130, and a controller 55140. The display apparatus 55100 may be configured as a TV and also as any one or more of various types of devices which are capable of displaying images.

The display 55110 displays an image. The display 55110 may be configured as at least one of a plasma display panel (PDP), an liquid crystal display (LCD), an organic light emitting diode (OLED), a flexible display, or the like.

The storage 55150 stores a first software component and may be configured, for example, as a high-capacity storage medium, such as a hard disk drive (HDD). A software component forms part of software, such as an application program, middleware and an operating system, and a plurality of software components may be combined to operate as a single software component. The first software component may be upgraded to another software component as necessary, and the display apparatus 55100 may utilize an enhanced software function by performing an upgrade of the first software component.

The connector 55130 is connected with the upgrade apparatus 55200 which is configured for upgrading the display apparatus 55100. The connector 55130 may be configured as a connector in accordance with at least one of HDMI, USB, and/or component standards. The display apparatus 55100 and the upgrade apparatus 55200 transmit and receive any one or more of various kinds of signals via the connector 55130, and the display apparatus 55100 may provide power to the upgrade apparatus 55200 via the connector 55130.

The upgrade apparatus 55200 which is connected via the connector 55130 stores a second software component. The second software component corresponds to the first software component and thus may be replaced by the first software component in order to form a single software component. Because the first software component and the second software component correspond to each other, there is a possibility of collision when the first software component and the second software component are run at the same time by the display apparatus 55100 and the upgrade apparatus 55200. Thus, it is important to prevent such a collision.

The controller 55140, which controls general operations of the display apparatus 55100 and serves to execute stored software by performing a series of operations, may be configured as a CPU.

The controller 55140 determines whether the upgrade apparatus 55200 is connected via the connector 55130, and determines whether to upgrade the first software component based on attributes of the first software component and the second software component when the upgrade apparatus 55200 is connected. In particular, the software component attributes may include a dependence on at least one hardware component. Software is dependent on installed hardware, and particular software is executable only when particular hardware which supports the software is installed. Thus, even though the second software component, which performs a more enhanced function than the first software component, is included in the upgrade apparatus 55200, the controller 55140 of the display apparatus 55100 may not run the second software component.

When the second software component is executable by the controller 55140, the controller 55140 may upgrade the first software component by replacing same with the second software component. The upgraded second software component replaces the existing first software component, and accordingly an enhanced software function may be utilized as the controller 55140 executes the second software component.

When the second software component is not executable by the controller 55140, the controller 55140 does not upgrade the first software component to the second software component. In particular, because the second software component is executable by the upgrade apparatus 55200, the controller 55140 disables the first software component if desiring to execute the second software component by using the upgrade apparatus 55200. More particularly, a function which may be performed by using the second software component is executed by using the upgrade apparatus 55200. Further, the controller 55140 may execute the first software component which is stored in the storage 55150 in view of the inability of the controller to execute the second software component.

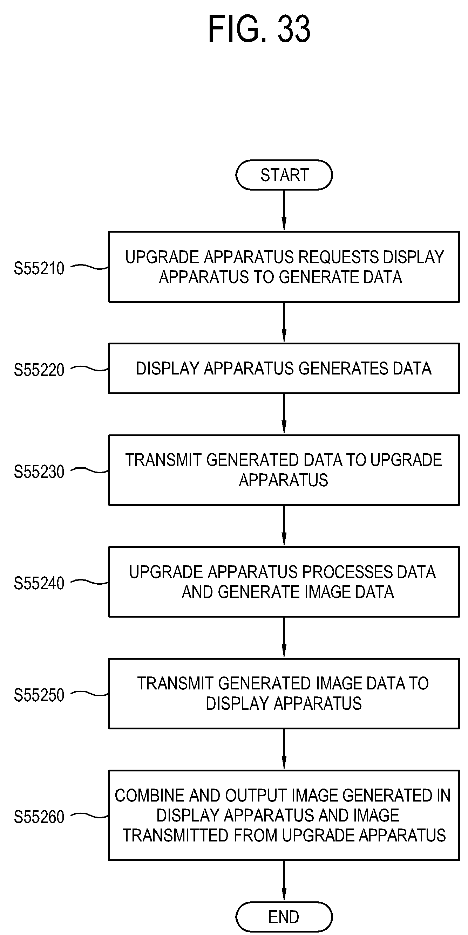

An exchange of data between the display apparatus 55100 and the upgrade apparatus 55200, such as, for example, an exchange of information relating to the respective attributes of each of the first software component and the second software component and a transfer of generated data, may be performed via a series of processes, which will be described with reference to FIG. 33.

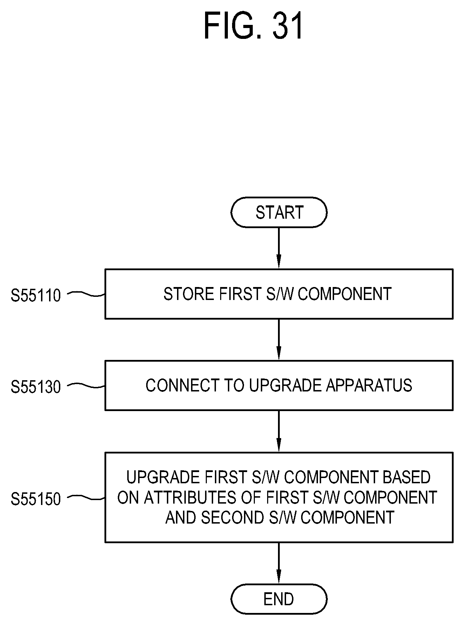

FIG. 31 is a flowchart which illustrates a control method which is executable by using the display apparatus 55100. The display apparatus 55100 stores a first software component in operation S55110. A software component forms part of software, such as an application program, middleware and an operating system, and a plurality of software components may be combined to operate as a single software component. The first software component may be upgraded to another software component as necessary, and the display apparatus 55100 may utilize an enhanced software function by performing an upgrade of the first software component.

The display apparatus 55100 is connected with the upgrade apparatus 55200 in operation S55130, and the upgrade apparatus 55200 stores a second software component which corresponds to the first software component. The second software component corresponds to the first software component, and thus may be replaced by the first software component in order to form a single software component.

The display apparatus 55100 upgrades the first software component based on respective attributes of each of the first software component and the second software component in operation S55150. In particular, the software component attributes may include a dependence on at least one hardware component. Software is dependent on installed hardware, and particular software is executable only when particular hardware which supports the software is installed. Thus, even though the second software component, which performs a more enhanced function than the first software component, is included in the upgrade apparatus 55200, the display apparatus 55100 may not run the second software component.

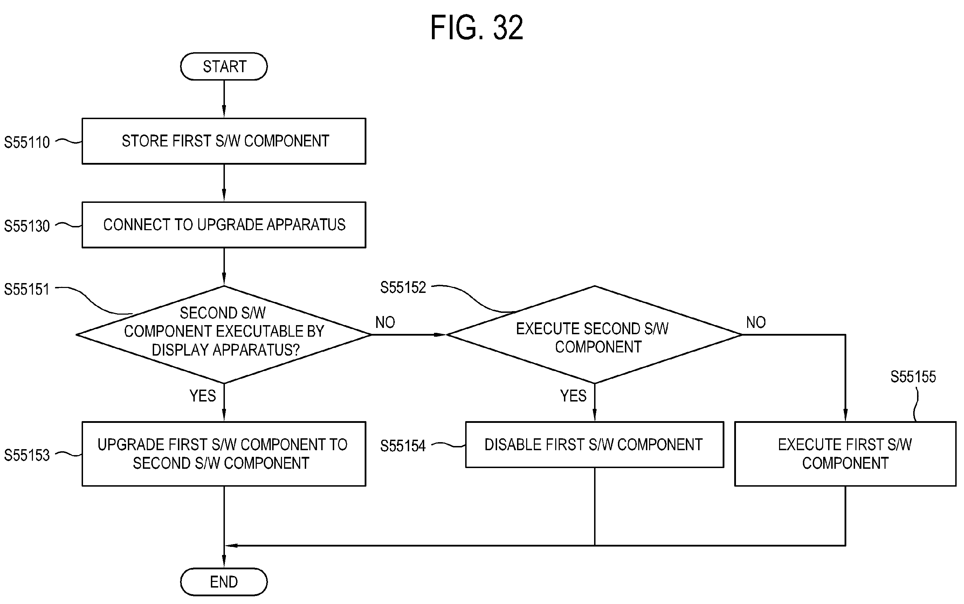

FIG. 32 illustrates a process by which the display apparatus 55100 upgrades a software component in detail. In operation S55110, a first software component is stored. The display apparatus 55100 is connected with the upgrade apparatus 55200 in operation S55130, and then determines whether the second software component which has been stored in the upgrade apparatus 55200 is executable by the display apparatus 55100 in operation S55151. When a determination is made that the second software component is executable by the controller 55140, the display apparatus 55100 upgrades the first software component to the second software component in operation S55153. The upgraded second software component replaces the existing first software component, and accordingly an enhanced software function may be utilized.

When a determination is made in operation S55151 that the second software component is not executable by the display apparatus 55100, the display apparatus 55100 does not upgrade the first software component to the second software component, and determines whether the second software component is to be executed by the upgrade apparatus 55200 in operation S55152.

When a determination is made that the second software component is to be executed, the display apparatus 55100 disables the first software component in operation S55154. In particular, a function which may be performed by using the second software component is executed by the upgrade apparatus 55200. In addition, when a determination is made that the second software component is not to be executed, the display apparatus 55100 may execute the stored first software component in operation S55155.

FIG. 33 illustrates a data exchange between the display apparatus 55100 and the upgrade apparatus 55200 according to an exemplary embodiment.

When the display apparatus 55100 is connected to the upgrade apparatus 55200, the upgrade apparatus 55200 requests the display apparatus 55100 to generate data in operation S55210. The display apparatus 55100 generates data in response to the request in operation S55220, and transmits the generated data to the upgrade apparatus 55200 in operation S55230. The upgrade apparatus 55200 processes the received data, generates corresponding image data in operation S55240, and transmits the generated image data to the display apparatus 55100 in operation S55250. The display apparatus 55100 combines an image which is generated in the display apparatus 55100 and an image which is received from the upgrade apparatus 55200, thereby outputting one screen in operation S55260. By execution of such a data exchange process, the display apparatus 55100 may display an image which has been generated in the connected upgrade apparatus 55200 together with an image which has been generated in the display apparatus 55100.

Although a few exemplary embodiments have been shown and described, it will be appreciated by those skilled in the art that changes may be made in these exemplary embodiments without departing from the principles of the present disclosure, the scope of which is defined in the appended claims and their equivalents.

## Claims

1. A display apparatus (1, 2210, 33100, 44100, 55100) comprising:
an image processor (11, 33120) which processes an image signal;
a display (12, 33130) which displays an image based on the image signal;
a connector (331100, 33200, 55200) on which an upgrade apparatus (2) which is used for upgrading at least one function of the display apparatus (1, 2210, 33100, 44100, 55100) is mounted;
**characterised in that**:
the display apparatus further comprises
a storage (14, 33150) which stores setting information including user-input information to be used by the display apparatus for reference in performing an image processing function;
a controller (15) which transmits the stored setting information to the upgrade apparatus when the upgrade apparatus is mounted such that the upgrade apparatus performs an image process based on the transmitted setting information to generate an image signal, and which controls the display (12, 33130) to display an image based on the image signal which is received from the upgrade apparatus; and
wherein user-input information includes information on brightness level.

2. The display apparatus (1, 2210, 33100, 44100, 55100) of claim 1, wherein the controller (15) receives changed setting information from the upgrade apparatus when the upgrade apparatus is removed, and causes the display (12, 33130) to display the image based on the changed setting information.

3. The display apparatus (1, 2210, 33100, 44100, 55100) of claim 1, wherein the controller (15) causes the storage (14, 33150) to store the setting information before an upgrade is performed, and performs the upgrade based on the stored setting information.

4. The display apparatus (1, 2210, 33100, 44100, 55100) of claim 3 wherein the controller (15) causes the storage (14, 33150) to store setting information which corresponds to an item selected from among a plurality of items which relate to the at least one function of the display apparatus (1, 2210, 33100, 44100, 55100).

5. The display apparatus (1, 2210, 33100, 44100, 55100) of claim 4, wherein the controller (15) causes the storage (14, 33150) to store the setting information based on a data structure of the setting information.

6. The display apparatus (1, 2210, 33100, 44100, 55100) of claim 1, wherein the controller (15) causes the storage (14, 33150) to store setting information which is changed after the upgrade apparatus is mounted, and performs an upgrade based on the changed setting information when the upgrade apparatus is replaced.

7. The display apparatus (1, 2210, 33100, 44100, 55100) of claim 1, wherein when the upgrade apparatus is replaced, the controller (15) performs an upgrade based on setting information which is provided by the replaced upgrade apparatus when the storage (14, 33150) has not stored setting information which corresponds to the replaced upgrade apparatus.

8. The display apparatus (1, 2210, 33100, 44100, 55100) of claim 1, wherein the storage (14, 33150) further stores a first software component, and the controller (15) upgrades the first software component based on an attribute of a second software component which is stored in the upgrade apparatus.

9. The display apparatus (1, 2210, 33100, 44100, 55100) of claim 1, in which the setting information relates to a usage environment or is set by the user.

10. The display apparatus (1, 2210, 33100, 44100, 55100) of claim 1, in which the setting information includes information on channel settings.

11. A control method which is executable by using a display apparatus (1,2210, 33100, 44100, 55100) which displays an image based on an image signal, the control method comprising:
determining whether an upgrade apparatus which is usable for upgrading at least one function of the display apparatus (1, 2210, 33100, 44100, 55100) is mounted; and
**characterised by**:
transmitting setting information which is stored in the display apparatus (1, 2210, 33100, 44100, 55100 which setting information includes user-input information to be used by the display apparatus for reference in performing image processing function such that the upgrade apparatus performs an image process based on the transmitted setting information to generate an image signal;
displaying an image based on of the image signal which is received from the upgrade apparatus; and
wherein user-input information includes information on brightness level.

12. The control method of claim 11, further comprising receiving changed setting information from the upgrade apparatus when the upgrade apparatus is removed, and displaying the image based on the changed setting information.

13. The control method of claim 11, further comprising storing the setting information before performing an upgrade, and performing the upgrade based on the stored setting information.

14. The control method of claim 13, wherein the storing comprises storing setting information which corresponds to an item selected from among a plurality of items which relate to the at least one function of the display apparatus (1, 2210, 33100, 44100, 55100).

15. The control method of claim 14, wherein the storing comprises storing the setting information based on a data structure of the setting information.

16. The control method of claim 11, further comprising storing the setting information which is changed after the upgrade apparatus is mounted, and performing an upgrade based on the changed setting information when the upgrade apparatus is replaced.

17. The control method of claim 11, further comprising upgrading a first software component stored in the display apparatus (1, 2210, 33100, 44100, 55100) based on an attribute of a second software component which is stored in the upgrade apparatus.

18. The control method of claim 11, in which the setting information relates to a usage environment as is set by a user.

19. The control method of claim 11, in which the setting information includes information on channel settings.

## Patentansprüche

1. Anzeigevorrichtung (1, 2210, 33100, 44100, 55100), die Folgendes umfasst:
einen Bildprozessor (11, 33120), der ein Bildsignal verarbeitet;
eine Anzeige (12, 33130), die, basierend auf dem Bildsignal, ein Bild anzeigt;
einen Verbinder (331100, 33200, 55200), auf welchem eine Upgradevorrichtung (2), die zum Upgraden mindestens einer Funktion der Anzeigevorrichtung (1, 2210, 33100, 44100, 55100) verwendet wird, montiert ist;
**dadurch gekennzeichnet, dass**:
die Anzeigevorrichtung ferner Folgendes umfasst:
einen Speicher (14, 33150), der Einstellinformationen speichert, die Benutzereingabeinformationen beinhalten, die von der Anzeigevorrichtung als Referenz beim Durchführen einer Bildverarbeitungsfunktion verwendet werden sollen;
eine Steuerung (15), die die gespeicherten Einstellinformationen an die Upgradevorrichtung überträgt, wenn die Upgradevorrichtung montiert ist, so dass die Upgradevorrichtung, basierend auf den übertragenen Einstellinformationen, eine Bildverarbeitung durchführt, um ein Bildsignal zu erzeugen, und die die Anzeige (12, 33130) steuert, basierend auf dem Bildsignal, das von der Upgradevorrichtung empfangen wird, ein Bild anzuzeigen; und
wobei Benutzereingabeinformationen Informationen über einen Helligkeitspegel beinhalten.

2. Anzeigevorrichtung (1, 2210, 33100, 44100, 55100) nach Anspruch 1, wobei die Steuerung (15) geänderte Einstellinformationen von der Upgradevorrichtung empfängt, wenn die Upgradevorrichtung entfernt wird, und die Anzeige (12, 33130) veranlasst, basierend auf den geänderten Einstellinformationen, das Bild anzuzeigen.

3. Anzeigevorrichtung (1, 2210, 33100, 44100, 55100) nach Anspruch 1, wobei die Steuerung (15) den Speicher (14, 33150) veranlasst, die Einstellinformationen zu speichern, bevor ein Upgrade durchgeführt wird, und, basierend auf den gespeicherten Einstellinformationen, das Upgrade durchführt.

4. Anzeigevorrichtung (1, 2210, 33100, 44100, 55100) nach Anspruch 3, wobei die Steuerung (15) den Speicher (14, 33150) veranlasst, Einstellinformationen zu speichern, die einem unter mehreren Punkten ausgewählten Punkt entsprechen, die sich auf die mindestens eine Funktion der Anzeigevorrichtung (1, 2210, 33100, 44100, 55100) beziehen.

5. Anzeigevorrichtung (1, 2210, 33100, 44100, 55100) nach Anspruch 4, wobei die Steuerung (15) den Speicher (14, 33150) veranlasst, basierend auf einer Datenstruktur der Einstellinformationen, die Einstellinformationen zu speichern.

6. Anzeigevorrichtung (1, 2210, 33100, 44100, 55100) nach Anspruch 1, wobei die Steuerung (15) den Speicher (14, 33150) veranlasst, Einstellinformationen zu speichern, die nach dem Montieren der Upgradevorrichtung geändert werden, und, basierend auf den geänderten Einstellinformationen, ein Upgrade durchführt, wenn die Upgradevorrichtung ersetzt wird.

7. Anzeigevorrichtung (1, 2210, 33100, 44100, 55100) nach Anspruch 1, wobei die Steuerung (15) ein Upgrade durchführt, wenn die Upgradevorrichtung ersetzt wird, basierend auf Einstellinformationen, die von der ersetzten Upgradevorrichtung bereitgestellt werden, wenn der Speicher (14, 33150) keine Einstellinformationen gespeichert hat, die der ersetzten Upgradevorrichtung entsprechen.

8. Anzeigevorrichtung (1, 2210, 33100, 44100, 55100) nach Anspruch 1, wobei der Speicher (14, 33150) ferner eine erste Softwarekomponente speichert und die Steuerung (15), basierend auf einem Attribut einer zweiten Softwarekomponente, die in der Upgradevorrichtung gespeichert ist, die erste Softwarekomponente upgradet.

9. Anzeigevorrichtung (1, 2210, 33100, 44100, 55100) nach Anspruch 1, bei der sich die Einstellinformationen auf eine Benutzerumgebung beziehen oder von dem Benutzer eingestellt werden.

10. Anzeigevorrichtung (1, 2210, 33100, 44100, 55100) nach Anspruch 1, bei der die Einstellinformationen Informationen über Kanaleinstellungen beinhalten.

11. Steuerverfahren, das unter Verwendung einer Anzeigevorrichtung (1, 2210, 33100, 44100, 55100) ausführbar ist, die, basierend auf einem Bildsignal, ein Bild anzeigt, wobei das Steuerverfahren Folgendes umfasst:
das Bestimmen, ob eine Upgradevorrichtung, die zum Upgraden mindestens einer Funktion der Anzeigevorrichtung (1, 2210, 33100, 44100, 55100) verwendbar ist, montiert ist; und
durch Folgendes gekennzeichnet ist:
das Übertragen von Einstellinformationen, die in der Anzeigevorrichtung (1, 2210, 33100, 44100, 55100) gespeichert sind, wobei die Einstellinformationen Benutzereingabeinformationen beinhalten, die von der Anzeigevorrichtung als Referenz beim Durchführen einer Bildverarbeitungsfunktion verwendet werden sollen, so dass die Upgradevorrichtung, basierend auf den übertragenen Einstellinformationen, eine Bildverarbeitung durchführt, um ein Bildsignal zu erzeugen;
das Anzeigen eines Bildes, basierend auf dem Bildsignal, das von der Upgradevorrichtung empfangen wurde; und
wobei Benutzereingabeinformationen Informationen über einen Helligkeitspegel beinhalten.

12. Steuerverfahren nach Anspruch 11, das ferner das Empfangen geänderter Einstellinformationen von der Upgradevorrichtung, wenn die Upgradevorrichtung entfernt wird, und das Anzeigen des Bildes, basierend auf den geänderten Einstellinformationen, umfasst.

13. Steuerverfahren nach Anspruch 11, das ferner das Speichern der Einstellinformationen, bevor ein Upgrade durchgeführt wird, und das Durchführen des Upgrades, basierend auf den gespeicherten Einstellinformationen, umfasst.

14. Steuerverfahren nach Anspruch 13, wobei das Speichern das Speichern von Einstellinformationen umfasst, die einem unter mehreren Punkten ausgewählten Punkt entsprechen, die sich auf die mindestens eine Funktion der Anzeigevorrichtung (1, 2210, 33100, 44100, 55100) beziehen.

15. Steuerverfahren nach Anspruch 14, wobei das Speichern das Speichern der Einstellinformationen umfasst, basierend auf einer Datenstruktur der Einstellinformationen.

16. Steuerverfahren nach Anspruch 11, das ferner das Speichern der Einstellinformationen umfasst, die nach dem Montieren der Upgradevorrichtung geändert werden, und das Durchführen eines Upgrades, basierend auf den geänderten Einstellinformationen, wenn die Upgradevorrichtung ersetzt wird.

17. Steuerverfahren nach Anspruch 11, das ferner das Upgraden einer ersten Softwarekomponente, die in der Anzeigevorrichtung (1, 2210, 33100, 44100, 55100) gespeichert ist, umfasst, basierend auf einem Attribut einer zweiten Softwarekomponente, die in der Upgradevorrichtung gespeichert ist.

18. Steuerverfahren nach Anspruch 11, bei dem sich die Einstellinformationen auf eine Benutzerumgebung beziehen, wie sie von einem Benutzer eingestellt wird.

19. Steuerverfahren nach Anspruch 11, bei dem die Einstellinformationen Informationen über Kanaleinstellungen beinhalten.

## Revendications

1. Appareil d'affichage (1, 2210, 33100, 44100, 55100) comprenant :
- un processeur d'image (11, 33120) qui traite un signal d'image ;
- un affichage (12, 33130) qui affiche une image en fonction du signal d'image ;
- un connecteur (331100, 33200, 55200) sur lequel est monté un appareil de mise à niveau (2) qui est utilisé pour mettre à niveau au moins une fonction de l'appareil d'affichage (1, 2210, 33100, 44100, 55100) ; **caractérisé en ce que** l'appareil d'affichage comprend en outre
- un stockage (14, 33150) qui stocke des informations de réglage comprenant des informations d'entrée d'utilisateur devant être utilisées par l'appareil d'affichage en qualité de référence lors de l'exécution d'une fonction de traitement d'image ;
- une unité de commande (15) qui transmet les informations de réglage stockées à l'appareil de mise à niveau lorsque l'appareil de mise à niveau est monté de sorte que l'appareil de mise à niveau effectue un traitement d'image en fonction des informations de réglage transmises afin de générer un signal d'image, et qui commande l'affichage (12, 33130) afin d'afficher une image en fonction du signal d'image reçu de l'appareil de mise à niveau ; et
dans lequel les informations d'entrée d'utilisateur comprennent des informations sur le niveau de luminosité.

2. Appareil d'affichage (1, 2210, 33100, 44100, 55100) selon la revendication 1, dans lequel l'unité de commande (15) reçoit des informations de réglage modifiées de l'appareil de mise à niveau lorsque l'appareil de mise à niveau est retiré, et ordonne à l'affichage (12, 33130) d'afficher l'image en fonction des informations de réglage modifiées.

3. Appareil d'affichage (1, 2210, 33100, 44100, 55100) selon la revendication 1, dans lequel l'unité de commande (15) ordonne au stockage (14, 33150) de stocker les informations de réglage avant qu'une mise à niveau soit effectuée, et effectue la mise à niveau en fonction des informations de réglage stockées.

4. Appareil d'affichage (1, 2210, 33100, 44100, 55100) selon la revendication 3, dans lequel l'unité de commande (15) ordonne au stockage (14, 33150) de stocker des informations de réglage qui correspondent à un objet choisi parmi plusieurs objets se rapportant à ladite au moins une fonction de l'appareil d'affichage (1, 2210, 33100, 44100, 55100).

5. Appareil d'affichage (1, 2210, 33100, 44100, 55100) selon la revendication 4, dans lequel l'unité de commande (15) ordonne au stockage (14, 33150) de stocker les informations de réglage en fonction d'une structure de données des informations de réglage.

6. Appareil d'affichage (1, 2210, 33100, 44100, 55100) selon la revendication 1, dans lequel l'unité de commande (15) ordonne au stockage (14, 33150) de stocker des informations de réglage qui sont modifiées après le montage de l'appareil de mise à niveau, et effectue une mise à niveau en fonction des informations de réglage modifiées lorsque l'appareil de mise à niveau est remplacé.

7. Appareil d'affichage (1, 2210, 33100, 44100, 55100) selon la revendication 1, dans lequel lorsque l'appareil de mise à niveau est remplacé, l'unité de commande (15) effectue une mise à niveau en fonction des informations de réglage qui sont fournies par l'appareil de mise à niveau remplacé lorsque le stockage (14, 33150) n'a pas stocké les informations de réglage qui correspondent à l'appareil de mise à niveau remplacé.

8. Appareil d'affichage (1, 2210, 33100, 44100, 55100) selon la revendication 1, dans lequel le stockage (14, 33150) stocke en outre un premier composant logiciel, et l'unité de commande (15) met à niveau le premier composant logiciel en fonction d'un attribut d'un second composant logiciel qui est stocké dans l'appareil de mise à niveau.

9. Appareil d'affichage (1, 2210, 33100, 44100, 55100) selon la revendication 1, dans lequel les informations de réglage concernent un milieu d'utilisation ou sont définies par l'utilisateur.

10. Appareil d'affichage (1, 2210, 33100, 44100, 55100) selon la revendication 1, dans lequel les informations de réglage comprennent des informations sur des réglages de canaux.

11. Procédé de commande pouvant être exécuté en utilisant un appareil d'affichage (1, 2210, 33100, 44100, 55100) qui affiche une image en fonction d'un signal d'image, lequel procédé de commande consiste à :
- déterminer si un appareil de mise à niveau servant à mettre à niveau au moins une fonction de l'appareil d'affichage (1, 2210, 33100, 44100, 55100) est monté ; et
Le procédé étant **caractérisé par**:
- la transmission des informations de réglage qui sont stockées dans l'appareil d'affichage (1, 2210, 33100, 44100, 55100), lesquelles informations de réglage comprennent des informations d'entrées d'utilisateur qui sont utilisées par l'appareil d'affichage en qualité de référence lors de l'exécution d'une fonction de traitement d'image de sorte que l'appareil de mise à niveau effectue un traitement d'image en fonction des informations de réglage transmises afin de générer un signal d'image ;
- l'affichage de l'image en fonction du signal d'image qui est reçu de l'appareil de mise à niveau ; et
dans lequel les informations d'entrée d'utilisateur comprennent des informations sur le niveau de luminosité.

12. Procédé de commande selon la revendication 11, consistant en outre à recevoir des informations de réglage modifiées de l'appareil de mise à niveau lorsque l'appareil de mise à niveau est retiré, et afficher l'image en fonction des informations de réglage modifiées.

13. Procédé de commande selon la revendication 11, consistant en outre à stocker les informations de réglage avant d'effectuer une mise à niveau, et effectuer la mise à niveau en fonction des informations de réglage stockées.

14. Procédé de commande selon la revendication 13, dans lequel le fait de stocker les informations consiste à stocker des informations de réglage qui correspondent à un objet choisi parmi plusieurs objets se rapportant à ladite au moins une fonction de l'appareil d'affichage (1, 2210, 33100, 44100, 55100).

15. Procédé de commande selon la revendication 14, dans lequel le fait de stocker les informations consiste à stocker des informations de réglage en fonction d'une structure de données des informations de réglage.

16. Procédé de commande selon la revendication 11, consistant en outre à stocker les informations de réglage qui sont modifiées après le montage de l'appareil de mise à niveau, et effectuer une mise à niveau en fonction des informations de réglage modifiées lorsque l'appareil de mise à niveau est remplacé.

17. Procédé de commande selon la revendication 11, consistant en outre à mettre à niveau un premier composant logiciel stocké dans l'appareil d'affichage (1, 2210, 33100, 44100, 55100) en fonction d'un attribut d'un second composant logiciel qui est stocké dans l'appareil de mise à niveau.

18. Procédé de commande selon la revendication 11, dans lequel les informations de réglage concernent un milieu d'utilisation tel que défini par un utilisateur.

19. Procédé de commande selon la revendication 11, dans lequel les informations de réglage comprennent des informations sur des réglages de canaux.
